# FASCICULE DE BREVET EUROPEEN

(11) **EP 3 565 983 B1**
(45) Date de publication et mention de la délivrance du brevet: **31.03.2021**
(21) Numéro de dépôt: 18701782.7
(22) Date de dépôt: 03.01.2018
(51) Int. Cl.: F16C 33/34, F16C 33/30, F16C 27/06, F16H 55/14

(54) **ROULEAU SYNCHRONISE A ROUES LIBRES**
SYNCHRONISIERTE FREILAUFROLLE
SYNCHRONIZED FREE-WHEEL ROLLER

(30) Priorité: 03.01.2017 FR 1750044
(43) Date de publication de la demande: 13.11.2019
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2018/050009
(87) Numéro de publication internationale: WO 2018/127657

(56) Documents cités:
- DE-A1- 1 658 581
- DE-A1-102012 102 777
- DE-C- 433 120
- US-A- 741 008

## Description

La présente invention est relative à un rouleau synchronisé à roues libres coopérant principalement soit avec quatre crémaillères et deux pistes de roulement planes, soit avec deux couronnes extérieures qui bordent une piste de roulement annulaire intérieure, et deux couronnes intérieures qui bordent une piste de roulement annulaire extérieure dont le diamètre est plus grand que celui de la piste de roulement annulaire intérieure.

On connaît diverses applications dans lesquelles des rouleaux synchronisés sont utilisés. Par exemple, le rouleau antifriction de bras tangentiel tel que décrit dans le brevet relatif à un moteur-pompe hydraulique à cylindrée fixe ou variable publié sous le N° FR 3 001 774 et appartenant au demandeur, constitue en soi un rouleau synchronisé.

Dans le même dit brevet N° FR 3 001 774, on note que le palier de rotor central du moteur-pompe hydraulique peut comporter des rouleaux de palier de rotor central tandis que le palier de rotor périphérique dudit moteur-pompe peut comporter des rouleaux de palier de rotor périphérique. Lesdits rouleaux sont également, et par nature, des rouleaux synchronisés.

Selon cette dernière application, on remarque que lesdits rouleaux peuvent rouler simultanément sur une piste intérieure de palier qui forme une piste de roulement annulaire intérieure, et sur une piste extérieure de palier qui forme une piste de roulement annulaire extérieure.

L'avantage de cette configuration recourant à des rouleaux synchronisés est que lesdits rouleaux restent constamment à égale distance les uns des autres grâce à des pignons de rouleau qu'ils comportent à chacune de leurs deux extrémités, lesdits pignons coopérant chacun d'une part, avec une couronne intérieure, et d'autre part, avec une couronne extérieure.

Les paliers à roulement qui résultent de ladite configuration ne nécessitent pas de cage à billes ou à rouleaux comme en comportent les roulements à billes ou à rouleaux ordinairement utilisés dans de nombreux dispositifs mécaniques. Ceci est avantageux en ce que ladite cage est à la fois moins précise et moins durable que des rouleaux synchronisés, et en ce qu'elle entre régulièrement en collision avec les billes ou les rouleaux qu'elle enserre ce qui génère des pertes par frottement au niveau de son contact avec lesdites billes ou lesdits rouleaux.

En outre, on note dans le brevet N° FR 3 001 774 qu'en s'engrenant avec les couronnes intérieures et extérieures avec lesquels ils coopèrent, les pignons de rouleau imposent aux rouleaux de palier une trajectoire bien perpendiculaire à l'axe de rotation du rotor central s'agissant du palier de rotor central, et bien perpendiculaire à l'axe du rotor périphérique s'agissant du palier de rotor périphérique.

Parmi les avantages revendiqués pour lesdits rouleaux dans le brevet N° FR 3 001 774, on note que ceux-ci peuvent être de gros diamètre de sorte que même s'ils sont soumis à une charge très élevée, la pression de Hertz qu'ils exercent sur la piste intérieure et sur la piste extérieure avec lesquelles ils coopèrent peut rester dans les limites de tenue mécanique des matériaux usuellement utilisés par l'homme de l'art pour réaliser les paliers à roulement.

En outre, cette conception particulière confère auxdits rouleaux une vitesse de rotation maximale qui reste acceptable malgré le fort diamètre des paliers de rotor que comporte le moteur-pompe.

Ainsi, les paliers à rouleaux synchronisés tels que décrits dans le brevet N° FR 3 001 774 peuvent à la fois être de grand diamètre, supporter de lourdes charges et des efforts radiaux élevés, et tourner à grande vitesse, cette combinaison de conditions fonctionnelles étant peu ou pas accessible aux paliers à roulement usuellement mis en oeuvre par l'homme de l'art.

En outre, on déduit aisément de cette configuration particulière que lesdits paliers peuvent offrir un rendement élevé grâce notamment à l'absence de cage tel que précédemment évoqué, mais aussi grâce à l'absence de nécessité de générer un peu de frottement entre les rouleaux et les pistes intérieure et extérieure avec lesquelles ils coopèrent pour obliger lesdits rouleaux à suivre une trajectoire la plus perpendiculaire possible à l'axe de rotation du palier dont ils constituent l'une des composantes.

En effet, selon les paliers à rouleaux synchronisés tels que décrits dans le brevet N° FR 3 001 774, l'orientation desdits rouleaux est assurée par le système d'engrenage que forment les pignons de rouleau avec les couronnes intérieures et extérieures avec lesquels ils coopèrent.

Parmi les autres applications dans lesquelles des rouleaux synchronisés sont utilisés, on trouve le dispositif de transmission mécanique pour moteur à cylindrée variable objet du brevet N° FR 2 786 530 appartenant au demandeur.

Ledit brevet expose un dispositif de guidage à roulement constitué de deux rouleaux synchronisés qui assurent un guidage sans frottement de deux demi-crémaillères sur un bloc moteur.

On remarque que selon une variante que propose ledit brevet N° FR 2 786 530, les rouleaux synchronisés peuvent être constitués d'un manchon cylindrique creux traversé longitudinalement par un axe aux deux extrémités duquel sont fixées des roues dentées rendues solidaires en rotation dudit axe par des cannelures. On note qu'en ce cas, un espace libre est laissé entre ledit manchon et ledit axe, ledit espace recevant une liaison élastique.

Le brevet N° FR 2 827 634 appartenant également au demandeur a quant à lui pour objet des perfectionnements apportés aux dispositifs de transmission mécanique pour moteur à cylindrée variable.

Ledit brevet prévoit également un rouleau synchronisé constitué d'un corps cylindrique comportant à chacune de ses extrémités des pignons, et une gorge de guidage prévue entre les pignons.

Cette configuration particulière se retrouve également dans le brevet N° 2 956 452 appartenant également au demandeur, et qui a pour objet un compresseur à piston à double effet guidé par un rouleau et entrainé par une roue dentée et des crémaillères. Dans ledit brevet N° 2 956 452, on note que le compresseur à piston à double effet comporte un organe de transmission qui présente une surface de roulement sur laquelle peut rouler un rouleau de guidage dont les extrémités présentent des petites roues dentées.

A l'instar du rouleau synchronisé qu'expose le brevet N° FR 2 827 634, le rouleau de guidage que prévoit le brevet N° 2 956 452 coopère avec des surfaces de roulement et des crémaillères.

Les rouleaux synchronisés tels qu'ils ont été décrits dans les brevets N° FR 3 001 774, N° FR 2 786 530, N° FR 2 827 634 et N° 2 956 452 ont tous la particularité de présenter une surface cylindrique roulante qui constitue le corps desdits rouleaux, le diamètre de ladite surface étant proche voire identique à celui du cercle primitif des roues dentées que comportent lesdits rouleaux à leurs extrémités.

En tout état de cause, les dispositifs ne comportant pas de surface cylindrique roulante comme celui que propose par exemple le brevet N°US 499,847 du 20 juin 1893 relatif à un roulement pour wagon, sont étrangers au sujet traité dans la présente demande de brevet. Cette remarque s'applique également au brevet N°GB 608,153 du 15 février 1946 relatif à des améliorations pour mécanisme à manivelle.

Outre présenter une surface cylindrique roulante garantissant un déplacement à frottement minimal, l'intérêt des rouleaux synchronisés tels qu'ils viennent d'être décrits est qu'ils conservent toujours la même vitesse de déplacement relativement aux crémaillères ou aux couronnes avec lesquelles ils coopèrent ou bien - selon le mécanisme dont il est question, qu'ils conservent toujours la même position relativement auxdites crémaillères ou auxdites couronnes.

On remarque que les rouleaux synchronisés sont principalement retenus pour des applications particulièrement chargées dans lesquelles lesdits rouleaux sont soumis à un effort de compression radiale élevé. Dans la plupart des cas, cette compression radiale exclut tout recours à un manchon cylindrique creux tel que le propose le brevet N° FR 2 786 530, ledit manchon étant insuffisamment rigide et étant trop peu résistant à l'écrasement. En outre, ladite compression pose divers problèmes de mise en oeuvre auxquels s'adresse directement le rouleau synchronisé à roues libres selon la présente invention.

En effet, ladite compression radiale déforme la surface cylindrique roulante du rouleau synchronisé, laquelle ne devient plus exactement circulaire en ce qu'elle présente deux méplats.

Cette compression radiale de la surface cylindrique roulante induit dans une certaine mesure une compression tangentielle de la matière constitutive de ladite surface, ce qui conduit à une modification sensible de la circonférence du rouleau synchronisé.

En conséquence, ladite compression tangentielle altère sensiblement la vitesse de rotation du rouleau synchronisé à même vitesse linéaire de déplacement dudit rouleau.

Pour illustrer les conséquences de l'altération géométrique qui vient d'être évoquée de ladite surface cylindrique roulante, prenons par exemple un rouleau synchronisé qui est placé entre une surface de roulement plane fixe et une surface de roulement plane mobile, chaque dite surface étant bordée de crémaillères avec lesquelles coopèrent les pignons chacun solidaire d'une extrémité dudit rouleau.

Lorsqu'on déplace la surface de roulement plane mobile, le rouleau synchronisé se déplace deux fois moins vite que ladite surface par rapport à la surface de roulement plane fixe et ceci, quelle que soit l'altération géométrique de la surface cylindrique roulante qui résulte de l'écrasement sous charge dudit rouleau.

Cependant, concomitamment à l'écrasement dudit rouleau synchronisé, le déplacement angulaire de ce dernier varie très sensiblement relativement à son déplacement linéaire.

Le problème est que le déplacement angulaire des pignons qui sont montés à chaque extrémité dudit rouleau est déterminé par les dents desdits pignons et par les dents des crémaillères avec lesquelles ils coopèrent. Le déplacement angulaire desdits pignons est donc invariable, cependant que le déplacement angulaire du rouleau varie en fonction de la charge radiale à laquelle il est soumis.

Sous forte charge, ledit rouleau tend à imposer aux pignons fixés à chacune de ses extrémités une vitesse de rotation différente de celle que les crémaillères imposent audits pignons. Comme ledit rouleau est soumis à une forte charge radiale, il adhère fortement à ses surfaces de roulement et résiste à la correction de position angulaire que tendent à produire ses pignons.

Il résulte de ceci que les dents des pignons et des crémaillères sont soumises à une charge anormale laquelle peut conduire à l'usure prématurée voire à la rupture desdites dents. En outre, ladite charge anormale produit du frottement, ce qui est dommageable au bilan énergétique global du mécanisme ou de l'appareil dans lequel est mis en oeuvre le rouleau synchronisé.

On remarquera que la différence entre la vitesse angulaire du rouleau et celle des pignons peut également provenir d'une part, de la précision de réalisation de la surface cylindrique roulante du rouleau synchronisé, et d'autre part, de la précision de réalisation du système d'engrenage que constituent les pignons fixés à chacune des extrémités dudit rouleau et les crémaillères avec lesquelles ils coopèrent.

En effet, ladite précision n'étant pas infinie, le diamètre de la surface cylindrique roulante ne coïncide pas exactement avec le diamètre du cercle primitif dudit système d'engrenage.

Aussi, dans le cas où, simultanément, le rouleau synchronisé est soumis à une charge radiale élevée cependant que les dents constitutives dudit système d'engrenage sont déjà en contact les unes des autres et tandis que le déplacement dudit rouleau tend à rapprocher lesdites dents les unes des autres, alors, une charge anormale survient au niveau desdites dents qui comme précédemment peut conduire à leur usure prématurée voire à leur rupture.

Comme précédemment, ladite charge radiale élevée produit des pertes énergétiques par frottement dommageables au bilan énergétique global du mécanisme ou de l'appareil dans lequel est mis en oeuvre le rouleau synchronisé.

On notera dans le brevet N° FR 2 827 634 que le rouleau synchronisé présente en son milieu une gorge de guidage qui coopère avec une nervure verticale que présente une piste de roulement solidaire du bloc moteur du moteur à cylindrée variable. Ladite gorge et ladite nervure assurent le guidage latéral du rouleau synchronisé.

Cette configuration présente l'inconvénient d'une certaine complexité de réalisation notamment parce que la piste de roulement solidaire du bloc moteur ne constitue plus une seule surface plate et uniforme facile à rectifier.

En outre, la division en deux portions longitudinales de la surface cylindrique roulante du rouleau synchronisé double le nombre de bords de ladite surface. Ceci implique de réaliser deux bombés sur ladite surface cylindrique - une par dite portion - pour limiter la contrainte appliquée au matériau constitutif du corps cylindrique du rouleau synchronisé au niveau des dits bords, ladite contrainte étant connue de l'homme de l'art sous l'appellation de « effet de bord ».

Il résulte de cette nécessité de double bombé que les deux dites portions longitudinales sont soumises à une pression de hertz maximale supérieure à celle à laquelle serait soumise une seule et unique surface cylindrique roulante non-divisée en deux portions longitudinales.

On notera également dans le brevet N° FR 2 827 634 que le rouleau synchronisé est constitué d'un ensemble monobloc usiné dans un seul et même lopin de matière tandis que ledit rouleau ne coopère qu'avec trois crémaillères de faible dimension et non pas quatre.

On note que deux des dites crémaillères de faible dimension sont solidaires du bloc moteur tandis que l'organe de transmission solidaire du piston du moteur à cylindrée variable n'en comporte qu'une seule.

Cette stratégie permet d'une part, de conserver l'orientation du rouleau synchronisé par rapport au bloc moteur tout en assurant la bonne synchronisation du déplacement vertical dudit rouleau par rapport à celui dudit piston et d'autre part, de permettre à l'organe de transmission de pivoter sans dommage pour ledit rouleau.

Si cette stratégie fonctionne effectivement, elle présente l'inconvénient de rendre plus complexe et coûteuse la réalisation du rouleau synchronisé.

En effet, la surface cylindrique roulante dudit rouleau devant autant que possible coïncider avec le diamètre du cercle primitif du système d'engrenage que forment les pignons dudit rouleau avec les crémaillères avec lesquelles ils coopèrent, la réalisation desdits pignons devient difficile en ce qu'il n'y a que très peu de dégagement d'outil pour réaliser lesdits pignons.

Aussi, produire un tel rouleau synchronisé monobloc nécessite de recourir à des procédés de réalisation coûteux comme l'usinage électrochimique de précision.

En outre, les traitements de surface et les traitements thermiques à appliquer à la surface cylindrique roulante qui est soumise à des pressions de Hertz élevées sont peu compatibles avec les dents des pignons qui - étant de petite dimension - deviendraient trop fragiles.

En conséquence, il faut soit laisser de forte surépaisseur de matière au niveau desdits pignons pour enlever la couche dure par exemple cémentée ou nitrurée par usinage ce qui augmente fortement le prix de revient en fabrication du rouleau synchronisé, soit masquer durant la cémentation du rouleau synchronisé les zones où doivent être réalisés lesdits pignons, ce qui conduit également à un prix de revient en fabrication dudit rouleau élevé.

On remarque toutefois que le coût de production unitaire d'un rouleau synchronisé monobloc tel qu'il vient d'être décrit reste acceptable sur un moteur à cylindrée variable comme que le présente le brevet N° FR 2 827 634 car chaque cylindre dudit moteur ne comporte qu'un seul dit rouleau.

En revanche, le même coût unitaire serait inacceptable s'agissant par exemple de réaliser les rouleaux synchronisés des paliers de rotor central et des paliers de rotor périphérique du moteur-pompe hydraulique à cylindrée fixe ou variable tel que le décrit le brevet N° FR 3 001 774, vu le grand nombre de dits rouleaux que comporte ledit moteur-pompe

Le brevet DE 16 58 581 A1 divulgue une solution pour le guidage axial de rouleaux synchronisés avec des capuchons d'extrémités fixés par des vis. Le montage d'un tel rouleau est relativement complexe. Z

C'est donc pour résoudre les problèmes fonctionnels et de prix de revient en fabrication qui viennent d'être exposés que, selon un mode particulier de réalisation, le rouleau synchronisé à roues libres :
- permet que la vitesse de rotation de la surface cylindrique roulante que présente le corps central dudit rouleau soit sensiblement différente de celle des pignons que comporte ledit rouleau en ses extrémités, et ceci, sans soumettre les dents desdits pignons et des crémaillères avec lesquelles ils coopèrent à une charge anormalement élevée notamment lorsque le rouleau synchronisé est lui-même soumis à une charge radiale élevée ;
- permet de prévoir une surface cylindrique roulante que présente le corps central dudit rouleau dont le diamètre est plus grand ou plus petit que celui du cercle primitif des pignons que comporte ledit rouleau en ses extrémités sans nuire au bon fonctionnement dudit rouleau, ceci permettant potentiellement de simplifier et de rendre moins onéreuse la fabrication dudit rouleau et/ou des pistes de roulement et crémaillères ou couronnes avec lesquelles il coopère ;

- autorise - lorsque ledit rouleau est soumis à une charge radiale élevée - une légère différence entre la vitesse d'avancement de la surface cylindrique roulante que présente le corps central dudit rouleau et la vitesse d'avancement des pignons que comporte ledit rouleau en ses extrémités, et ceci, sans soumettre les dents desdits pignons et des crémaillères ou couronnes avec lesquelles ils coopèrent à une charge anormalement élevée ;
- prévoit des moyens de guidage axial simples, peu onéreux à fabriquer, et qui ne nécessitent pas de diviser la surface cylindrique roulante dudit rouleau en plusieurs portions pour laisser place à quelque gorge de guidage que ce soit ;
- permet de confier à des pièces dédiées et indépendantes les fonctions de roulage, d'engrènement et de guidage axial, ce qui permet de réduire très significativement le prix de revient en fabrication dudit rouleau en recourant à des procédés de fabrication productifs et à faible prix de revient pour chaque dite pièce.

Il est entendu que le rouleau synchronisé à roues libres selon l'invention s'adresse principalement aux paliers de grandes dimensions, tournant à grande vitesse, et soumis à de fortes charges tels que présentés dans le brevet relatif au moteur-pompe hydraulique à cylindrée fixe ou variable publié sous le N° FR 3 001 774 et appartenant au demandeur.

Toutefois, le rouleau synchronisé à roues libres selon l'invention peut aussi s'appliquer sans restriction à tout autre palier ou mécanisme auquel il apporterait un avantage fonctionnel, énergétique, ou de toute nature que ce soit, ledit palier ou mécanisme étant mis en oeuvre dans quelque application que ce soit.

A titre d'exemple non-limitatif, le rouleau synchronisé à roues libres selon l'invention peut s'appliquer au moteur à cylindrée variable notamment objet des brevets N° FR 2 786 530 ou N° FR 2 827 634 qui appartiennent au demandeur, en se substituant aux rouleaux à manchon ou monobloc tels que décrits et exposés dans lesdits brevets.

A titre d'autre exemple non-limitatif, le rouleau synchronisé à roues libres selon l'invention peut avantageusement constituer le rouleau antifriction de bras tangentiel tel que décrit dans le brevet relatif au moteur-pompe hydraulique à cylindrée fixe ou variable publié sous le N° FR 3 001 774 et appartenant au demandeur.

Les autres caractéristiques de la présente invention ont été décrites dans la description et dans les revendications secondaires dépendantes directement ou indirectement de la revendication principale.

Le rouleau synchronisé à roues libres suivant la présente invention comprend un corps central qui expose une surface cylindrique externe roulante prévue enserrée entre deux pistes de roulement sur lesquelles elle roule simultanément lorsque lesdites pistes se déplacent l'une par rapport à l'autre, chaque dite piste étant solidairement bordée de crémaillères de synchronisation ou de couronnes de synchronisation qui forment un système d'engrenage avec un pignon de synchronisation que présente chaque terminaison du corps central, ledit rouleau comprenant :
- Un axe lisse de diamètre inférieur à celui de la surface cylindrique roulante, aménagé à chaque terminaison du corps central, et autour duquel le pignon de synchronisation peut tourner librement ;
- Des moyens d'arrêt axial de pignon solidaires de l'axe lisse qui prennent appui d'une part, directement ou indirectement sur ledit axe et d'autre part, directement ou indirectement sur le pignon de synchronisation, pour empêcher ledit pignon de sortir dudit axe ;
- Des moyens de guidage axial de rouleau qui prennent appui d'une part, directement ou indirectement sur le corps central et d'autre part, directement ou indirectement sur l'une au moins des pistes de roulement avec lesquelles coopère la surface cylindrique roulante, pour garder cette dernière approximativement centrée sur lesdites pistes.

Le rouleau synchronisé à roues libres suivant la présente invention comprend des moyens d'arrêt axial de pignon qui sont constitués d'un anneau élastique d'arrêt axial logé dans une gorge d'anneau élastique aménagée sur l'axe lisse.

Le rouleau synchronisé à roues libres suivant la présente invention comprend des moyens de guidage axial de rouleau qui sont constitués d'une rondelle rigide de guidage axial qui est axialement et directement ou indirectement intercalée entre le pignon de synchronisation et une face d'appui axial qu'expose le corps central entre l'axe lisse et la surface cylindrique externe roulante, ladite rondelle rigide pouvant prendre appui sur une piste axiale de guidage qu'expose axialement au moins l'une des pistes de roulement.

Le rouleau synchronisé à roues libres suivant la présente invention comprend une rondelle élastique de guidage axial qui est intercalée entre la rondelle rigide de guidage axial et le pignon de synchronisation, ladite rondelle élastique tendant à plaquer d'une part, la rondelle rigide de guidage axial contre la face d'appui axial avec laquelle elle coopère et d'autre part, le pignon de synchronisation contre les moyens d'arrêt axial de pignon avec lesquels il coopère.

Le rouleau synchronisé à roues libres suivant la présente invention comprend une rondelle élastique de guidage axial qui est intercalée entre le pignon de synchronisation et les moyens d'arrêt axial de pignon, ladite rondelle élastique tendant à plaquer le pignon de synchronisation contre la rondelle rigide de guidage axial de sorte que cette dernière se trouve à son tour plaquée contre la face d'appui axial avec laquelle elle coopère.

Le rouleau synchronisé à roues libres suivant la présente invention comprend une rondelle élastique de guidage axial qui comporte en son centre des griffes de centrage encliquetées dans une gorge à griffes aménagée sur l'axe lisse, ladite gorge constituant les moyens d'arrêt axial de pignon.

Le rouleau synchronisé à roues libres suivant la présente invention comprend des moyens élastiques de centrage radial qui sont intercalés radialement entre l'axe lisse et le pignon de synchronisation, lesdits moyens tendant à toujours recentrer ledit pignon sur ledit axe.

Le rouleau synchronisé à roues libres suivant la présente invention comprend des moyens élastiques de centrage radial qui sont constitués d'au moins trois languettes élastiques de centrage radial qui d'une part, émergent radialement de la surface interne d'un évidemment central que comporte le pignon de synchronisation et d'autre part, peuvent toucher l'axe lisse.

Le rouleau synchronisé à roues libres suivant la présente invention comprend des moyens élastiques de centrage radial qui sont constitués d'au moins une rondelle à languettes qui présente en son centre un manchon tournant qui peut tourner autour de l'axe lisse, et dont la face cylindrique externe est hérissée d'au moins trois languettes élastiques de centrage radial qui peuvent appuyer sur la surface interne d'un évidemment central que comporte le pignon de synchronisation.

Le rouleau synchronisé à roues libres suivant la présente invention comprend des moyens élastiques de centrage radial qui sont constitués d'au moins trois anneaux déformables qui d'une part, sont placés dans un logement d'anneau aménagé sur la surface interne d'un évidemment central que comporte le pignon de synchronisation et d'autre part, peuvent toucher l'axe lisse.

Le rouleau synchronisé à roues libres suivant la présente invention comprend des moyens élastiques de centrage radial qui sont constitués d'au moins une rondelle élastique à ondulations radiales logée entre d'une part, la face cylindrique interne d'un évidemment central que comporte le pignon de synchronisation et d'autre part, l'axe lisse.

Le rouleau synchronisé à roues libres suivant la présente invention comprend des moyens élastiques de centrage radial qui sont constitués d'au moins un anneau compressible réalisé en matériau souple, ledit anneau s'intercalant radialement entre d'une part, la surface interne d'un évidemment central que comporte le pignon de synchronisation et d'autre part, une bague support d'anneau souple qui peut tourner autour de l'axe lisse.

Le rouleau synchronisé à roues libres suivant la présente invention comprend un pignon de synchronisation qui présente des moyens élastiques de centrage radial qui tendent à toujours recentrer ledit pignon sur l'axe lisse et qui sont constitués d'au moins une languette élastique de centrage radial dont la première extrémité est solidaire d'une jante de pignon que présente en sa périphérie le pignon de synchronisation et dont la deuxième extrémité est solidaire d'un moyeu de pignon que présente en son centre le pignon de synchronisation, ledit moyeu s'articulant autour de l'axe lisse.

Le rouleau synchronisé à roues libres suivant la présente invention comprend un pignon de synchronisation qui présente des moyens élastiques de centrage radial qui tendent à toujours recentrer ledit pignon sur l'axe lisse et qui sont constitués d'un voile de faible épaisseur formant au moins un cône de voile, la première extrémité dudit voile étant solidaire d'une jante de pignon que présente en sa périphérie le pignon de synchronisation tandis que la deuxième extrémité dudit voile est solidaire d'un moyeu de pignon que présente en son centre le pignon de synchronisation, ledit moyeu s'articulant autour de l'axe lisse.

Le rouleau synchronisé à roues libres suivant la présente invention comprend dans l'une au moins des terminaisons du corps central un évidement anti-effet de bord qui est situé entre l'axe lisse et la surface cylindrique externe roulante.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

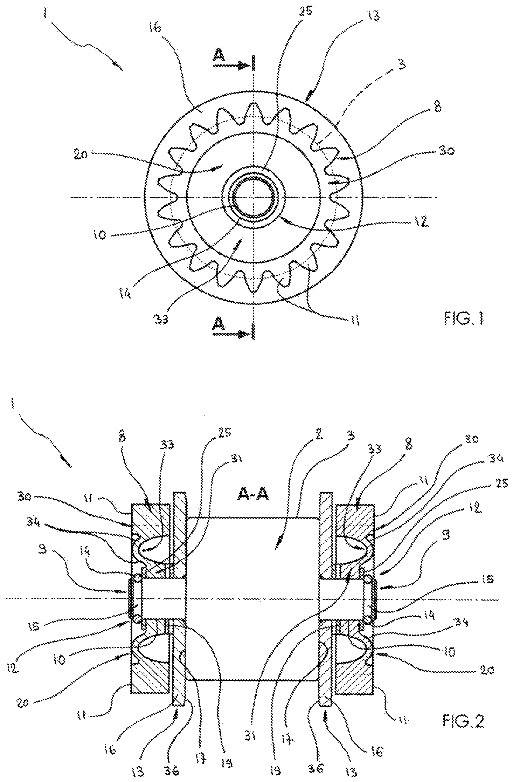

Figures 1 et 2 sont respectivement une vue latérale et une vue en coupe schématique du rouleau synchronisé à roues libres suivant l'invention dans une variante selon laquelle le pignon de synchronisation présente des moyens élastiques de centrage radial constitués d'un voile de faible épaisseur formant deux cônes de voile tandis qu'une rondelle rigide de guidage axial constitue les moyens de guidage axial de rouleau, ladite rondelle rigide étant maintenue plaquée contre la face d'appui axial avec laquelle elle coopère par une rondelle élastique de guidage axial intercalée entre ladite rondelle rigide et le pignon de synchronisation.

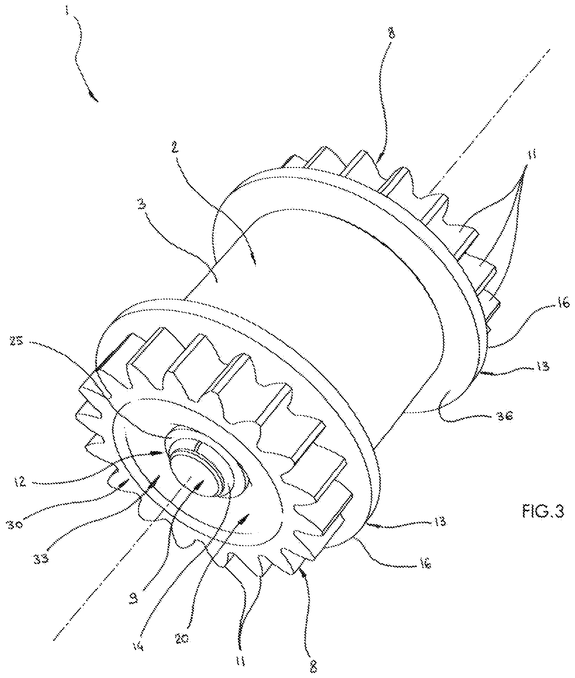

Figure 3 est une vue tridimensionnelle du rouleau synchronisé à roues libres suivant l'invention et selon sa variante montrée en figures 1 et 2.

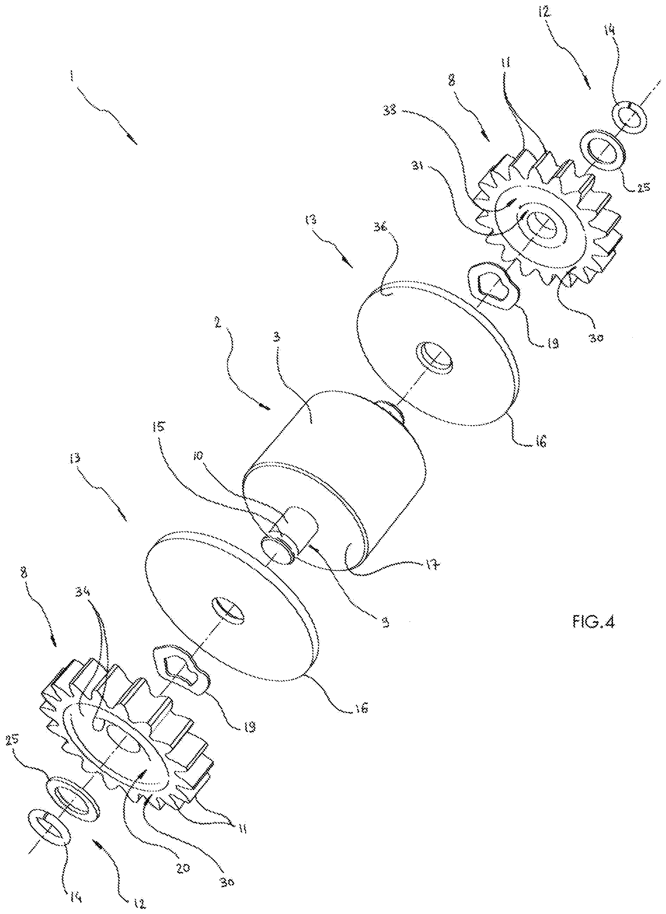

Figure 4 est une vue tridimensionnelle éclatée du rouleau synchronisé à roues libres suivant l'invention et selon sa variante montrée en figures 1 et 2.

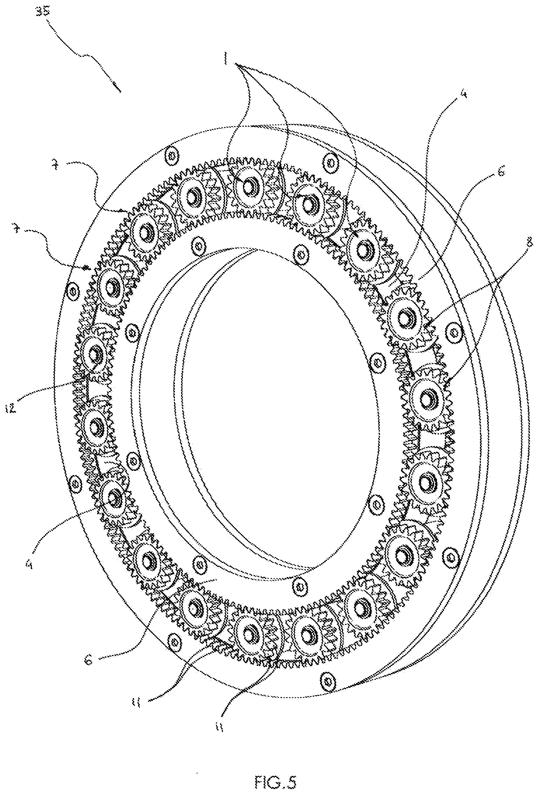

Figure 5 est une vue tridimensionnelle d'un palier à rouleaux synchronisés mettant en oeuvre le rouleau synchronisé à roues libres suivant l'invention et selon sa variante montrée en figures 1 et 2.

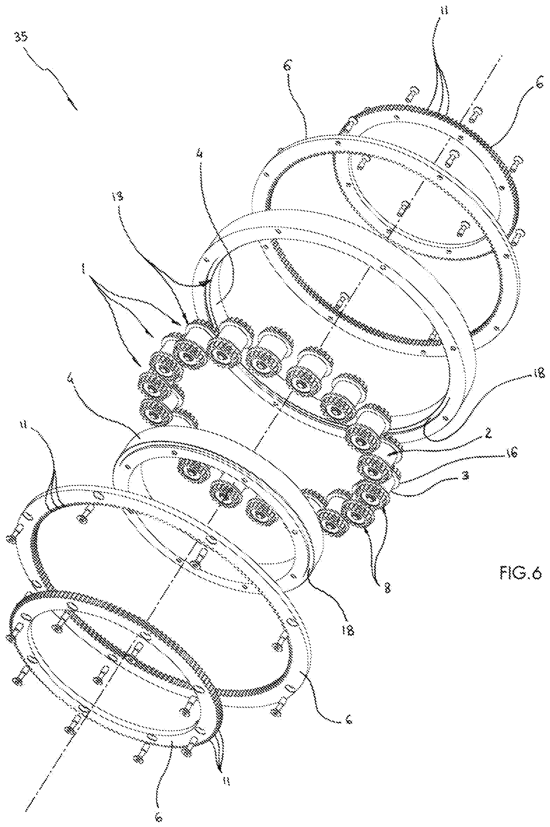

Figure 6 est une vue tridimensionnelle éclatée du palier à rouleaux synchronisés montré en figure 5, lequel met en oeuvre le rouleau synchronisé à roues libres suivant l'invention et selon sa variante montrée en figures 1 et 2.

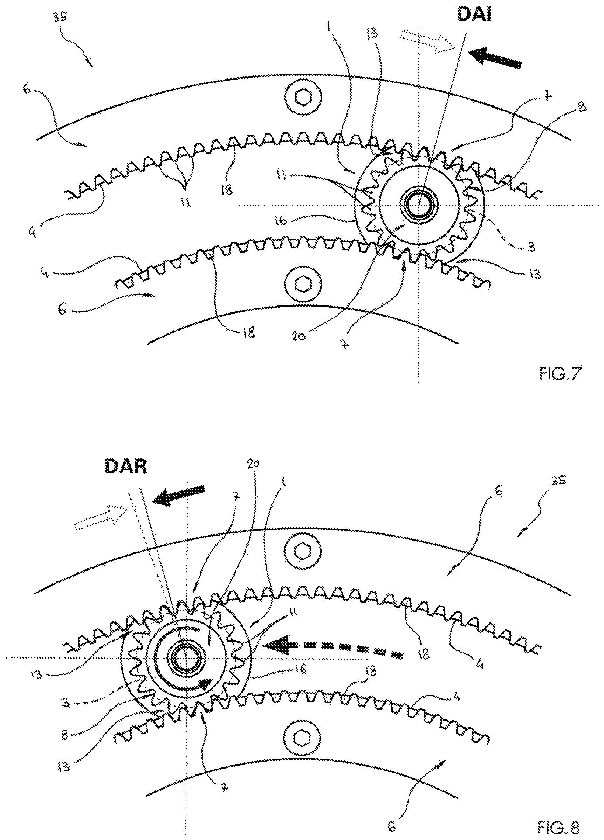

Figures 7 et 8 sont des vues latérales du rouleau synchronisé à roues libres suivant l'invention et selon sa variante montrée en figures 1 et 2, lesdites vues permettant d'illustrer - dans le contexte du palier à rouleaux synchronisés montré en figures 5 et 6 - la faculté dudit rouleau à s'accommoder de toute différence entre la vitesse angulaire suivant son axe propre de sa surface cylindrique externe roulante d'une part, et de la vitesse angulaire également selon leur axe propre de ses pignons de synchronisation d'autre part, ladite différence conduisant à un décalage angulaire de roulement entre ladite surface et lesdits pignons.

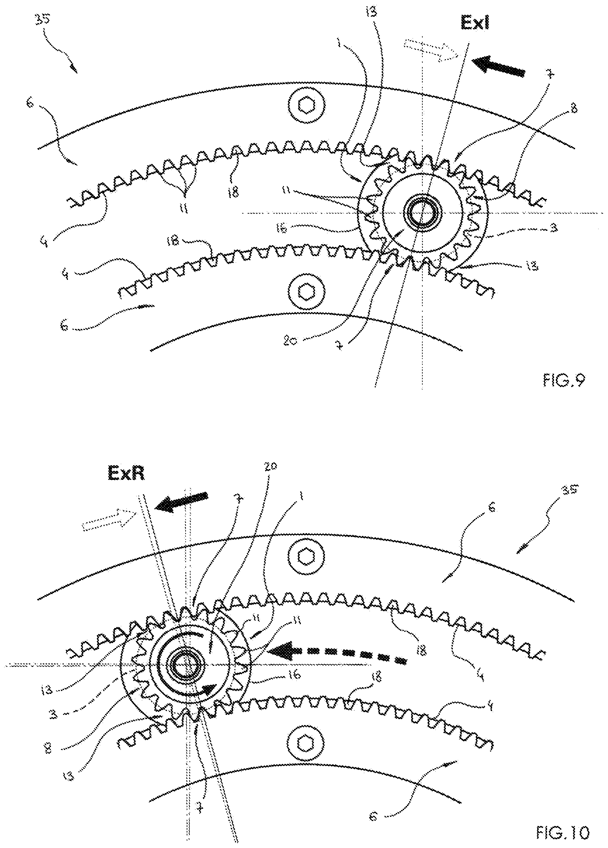

Figures 9 et 10 sont des vues latérales du rouleau synchronisé à roues libres suivant l'invention et selon sa variante montrée en figures 1 et 2, lesdites vues permettant d'illustrer - dans le contexte du palier à rouleaux synchronisés montré en figures 5 et 6 - la faculté dudit rouleau à s'accommoder de toute différence entre la vitesse angulaire de la surface cylindrique externe roulante par rapport à l'axe du palier d'une part, et la vitesse angulaire des pignons de synchronisation toujours par rapport à l'axe dudit palier d'autre part, ladite différence conduisant à une excentration de roulement entre ladite surface et lesdits pignons.

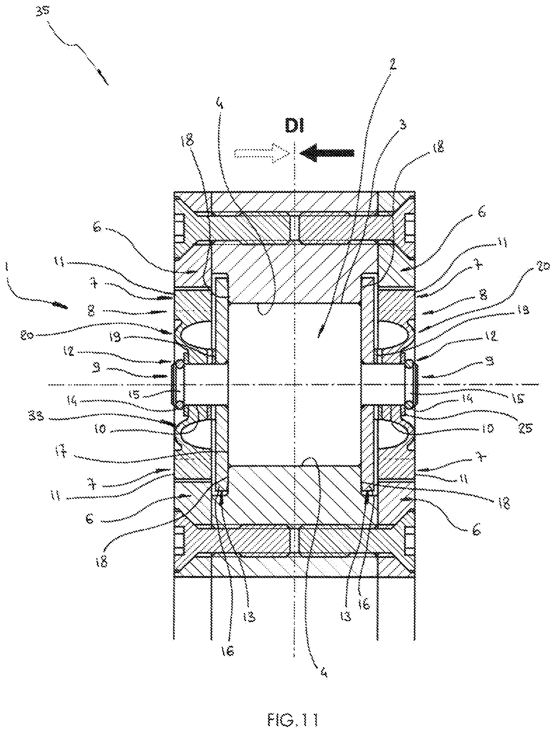

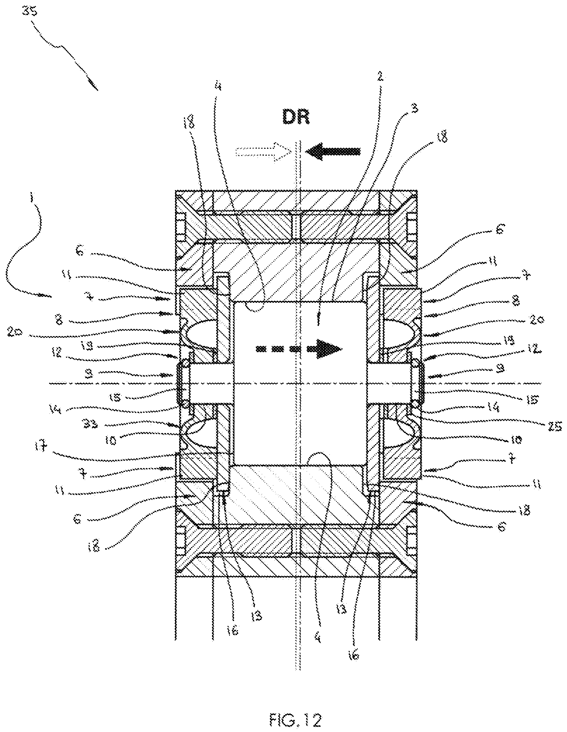

Figures 11 et 12 sont des vues en coupe schématique du rouleau synchronisé à roues libres suivant l'invention et selon sa variante montrée en figures 1 et 2, lesdites vues permettant d'illustrer - dans le contexte du palier à rouleaux synchronisés montré en figures 5 et 6 - la faculté dudit rouleau à s'accommoder de tout désalignement de roulement de sa surface cylindrique externe roulante par rapport aux pistes de roulement avec lesquelles elle coopère et ceci, notamment au moyen de la rondelle rigide de guidage axial et de la rondelle élastique de guidage axial que comprend ledit rouleau.

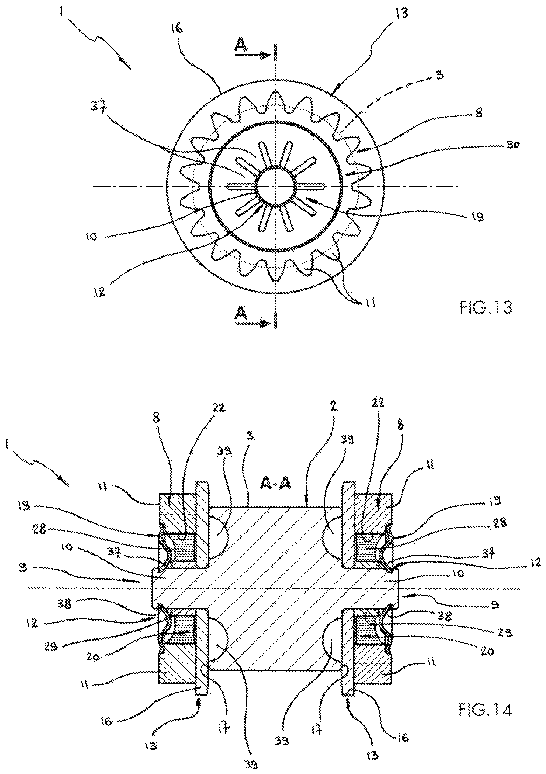

Figures 13 et 14 sont respectivement une vue latérale et une vue en coupe schématique du rouleau synchronisé à roues libres suivant l'invention dans une variante selon laquelle le pignon de synchronisation présente des moyens élastiques de centrage radial constitués d'un anneau compressible réalisé en matériau souple cependant qu'une rondelle élastique de guidage axial est intercalée entre le pignon de synchronisation et les moyens d'arrêt axial de pignon, ladite rondelle comportant en son centre des griffes de centrage encliquetées dans une gorge à griffes aménagée sur l'axe lisse, et tandis que les terminaisons du corps central présentent une face d'appui axial creusée d'un évidement anti-effet de bord.

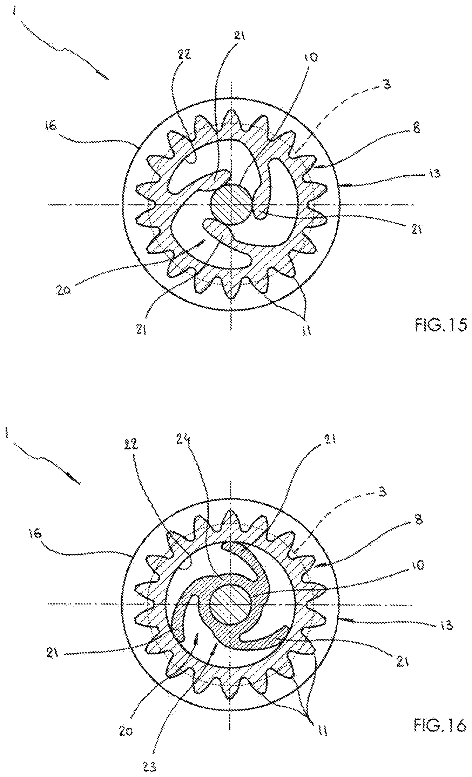

Figure 15 est une vue en coupe schématique du pignon de synchronisation et de l'axe lisse du rouleau synchronisé à roues libres suivant l'invention dans une variante selon laquelle des moyens élastiques de centrage radial sont intercalés radialement entre ledit axe et ledit pignon qui prennent la forme de trois languettes élastiques de centrage radial qui émergent radialement de la surface interne d'un évidemment central que comporte ledit pignon, lesdites languettes pouvant toucher ledit axe.
Figure 16 est une vue en coupe schématique du pignon de synchronisation et de l'axe lisse du rouleau synchronisé à roues libres suivant l'invention dans une variante selon laquelle des moyens élastiques de centrage radial sont intercalés radialement entre ledit axe et ledit pignon qui prennent la forme d'une rondelle à languettes qui présente en son centre un manchon tournant qui peut tourner autour dudit axe, et dont la face cylindrique externe est hérissée de trois languettes élastiques de centrage radial qui peuvent appuyer sur la surface interne d'un évidemment central que comporte le pignon de synchronisation.

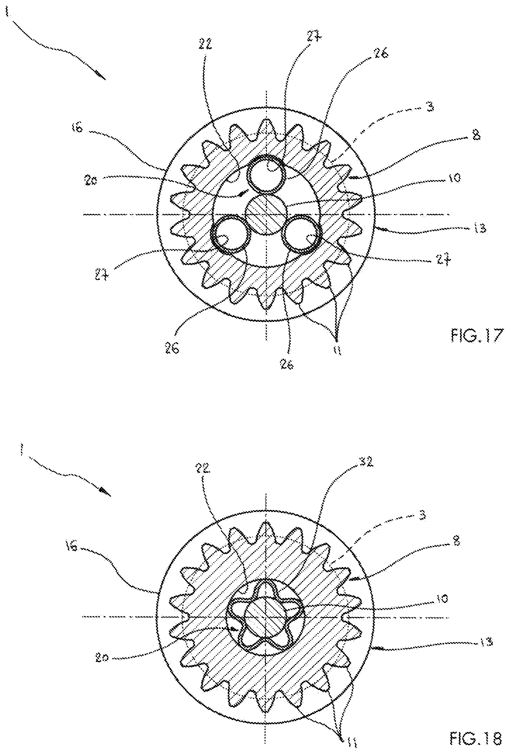

Figure 17 est une vue en coupe schématique du pignon de synchronisation et de l'axe lisse du rouleau synchronisé à roues libres suivant l'invention dans une variante selon laquelle des moyens élastiques de centrage radial sont intercalés radialement entre ledit axe et ledit pignon qui prennent la forme de trois anneaux déformables chacun placé dans un logement d'anneau aménagé sur la surface interne d'un évidemment central que comporte le pignon de synchronisation, lesdits anneaux pouvant toucher l'axe lisse.
Figure 18 est une vue en coupe schématique du pignon de synchronisation et de l'axe lisse du rouleau synchronisé à roues libres suivant l'invention dans une variante selon laquelle des moyens élastiques de centrage radial sont intercalés radialement entre ledit axe et ledit pignon qui prennent la forme d'une rondelle élastique à ondulations radiales logée entre la face cylindrique interne d'un évidemment central que comporte le pignon de synchronisation d'une part, et l'axe lisse d'autre part.

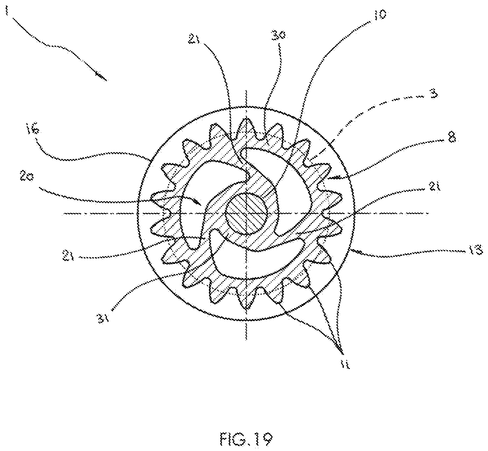

Figure 19 est une vue en coupe schématique du pignon de synchronisation et de l'axe lisse du rouleau synchronisé à roues libres suivant l'invention dans une variante selon laquelle le pignon de synchronisation présente des moyens élastiques de centrage radial qui sont constitués de trois languettes élastiques de centrage radial dont la première extrémité est solidaire d'une jante de pignon que présente en sa périphérie le pignon de synchronisation, et dont la deuxième extrémité est solidaire d'un moyeu de pignon que présente en son centre ledit pignon de synchronisation, ledit moyeu s'articulant autour de l'axe lisse.

### DESCRIPTION DE L'INVENTION :

On a montré en figures 1 à 19 le rouleau synchronisé à roues libres 1, divers détails de ses composants, ses variantes, et ses accessoires.

Comme l'illustre particulièrement la figure 2, le rouleau synchronisé à roues libres 1 comprend un corps central 2 qui expose une surface cylindrique externe roulante 3. Comme on le voit en figures 7 à 12, ladite surface 3 est prévue pour être enserrée entre deux pistes de roulement 4 sur lesquelles elle roule simultanément lorsque lesdites pistes 4 se déplacent l'une par rapport à l'autre.

Sur les figures 7 à 12 - et aussi sur les figures 5 et 6 montrant le rouleau synchronisé à roues libres 1 selon l'invention mis en œuvre dans un palier à rouleaux synchronisés 35 - on remarque que chaque piste de roulement 4 est solidairement bordée de crémaillères de synchronisation ou de couronnes de synchronisation 6 qui forment un système d'engrenage 7 avec un pignon de synchronisation 8 que présente chaque terminaison 9 du corps central 2.

Sur les figures 1 à 19, on notera que le rouleau synchronisé à roues libres 1 selon l'invention se distingue de l'art antérieur en ce qu'il comporte un axe lisse 10 de diamètre inférieur à celui de la surface cylindrique roulante 3, aménagé à chaque terminaison 9 du corps central 2, et autour duquel le pignon de synchronisation 8 peut tourner librement de sorte que si les pistes de roulement 4 tendent à imposer à la surface cylindrique externe roulante 3 une vitesse de rotation sensiblement différente de celle que les crémaillères de synchronisation ou couronnes de synchronisation 6 imposent au pignon de synchronisation 8, des dents 11 que comporte le système d'engrenage 7 ne sont pas soumises à une charge excessive.

En outre, on remarque - particulièrement en figures 1 à 14 - que des moyens d'arrêt axial de pignon 12 solidaires de l'axe lisse 10 prennent appui d'une part, directement ou indirectement sur ledit axe 10 et d'autre part, directement ou indirectement sur le pignon de synchronisation 8, pour empêcher ledit pignon 8 de sortir dudit axe 10.

Enfin, on note que le rouleau synchronisé à roues libres 1 selon l'invention comporte des moyens de guidage axial de rouleau 13 qui prennent appui d'une part, directement ou indirectement sur le corps central 2 et d'autre part, directement ou indirectement sur l'une au moins des pistes de roulement 4 avec lesquelles coopère la surface cylindrique roulante 3, pour garder cette dernière approximativement centrée sur lesdites pistes 4. Ceci se voit de façon particulièrement évidente en figures 11 et 12.

Les figures 1 à 4 permettent de remarquer que le rouleau synchronisé à roues libres 1 suivant l'invention peut comporter des moyens d'arrêt axial de pignon 12 qui sont constitués d'un anneau élastique d'arrêt axial 14 logé dans une gorge d'anneau élastique 15 aménagée sur l'axe lisse 10, une rondelle d'arrêt axial 25 pouvant en ce cas être axialement intercalée entre ledit anneau 14 et le pignon de synchronisation 8.

En figures 1 à 4 et 7 à 19, on note que les moyens de guidage axial de rouleau 13 peuvent être constitués d'une rondelle rigide de guidage axial 16 qui est axialement et directement ou indirectement intercalée entre le pignon de synchronisation 8 et une face d'appui axial 17 qu'expose le corps central 2 entre l'axe lisse 10 et la surface cylindrique externe roulante 3.

Dans ce cas, ladite rondelle rigide 16 peut prendre appui sur une piste axiale de guidage 18 qu'expose axialement au moins l'une des pistes de roulement 4.

On note que la rondelle rigide de guidage axial 16 et/ou la piste axiale de guidage 18 peut exposer - au niveau de la zone de contact entre ladite rondelle 16 et ladite piste 18 - un bord en dépouille 36 qui évite que la matière constitutive de ladite rondelle 16 n'entaille la matière constitutive de ladite piste 18, ou inversement.

On peut préciser ici que - comme l'illustrent les figures 1, 4, 11 et 12 - une rondelle élastique de guidage axial 19 peut être intercalée entre la rondelle rigide de guidage axial 16 et le pignon de synchronisation 8, ladite rondelle élastique 19 tendant à plaquer d'une part, la rondelle rigide de guidage axial 16 contre la face d'appui axial 17 avec laquelle elle coopère et d'autre part, le pignon de synchronisation 8 contre les moyens d'arrêt axial de pignon 12 avec lesquels il coopère.

A titre d'alternative montrée en figures 13 et 14, une rondelle élastique de guidage axial 19 peut être intercalée entre le pignon de synchronisation 8 et les moyens d'arrêt axial de pignon 12, ladite rondelle élastique 19 tendant à plaquer le pignon de synchronisation 8 contre la rondelle rigide de guidage axial 16 de sorte que cette dernière se trouve à son tour plaquée contre la face d'appui axial 17 avec laquelle elle coopère.

On notera que selon cette configuration particulière du rouleau synchronisé à roues libres 1 suivant l'invention, ladite rondelle élastique 19 peut se substituer à une rondelle d'arrêt axial 25 axialement intercalée entre un anneau élastique d'arrêt axial 14 logé dans une gorge d'anneau élastique 15 aménagée sur l'axe lisse 10 - ledit anneau 14 constituant en ce cas les moyens d'arrêt axial de pignon 12 - et le pignon de synchronisation 8.

Toujours selon la configuration particulière montrée en montrée en figures 13 et 14, on notera que la rondelle élastique de guidage axial 19 peut comporter en son centre des griffes de centrage 37 encliquetées dans une gorge à griffes 38 aménagée sur l'axe lisse 10, ladite gorge 38 constituant alors les moyens d'arrêt axial de pignon 12.

On aura remarqué en figures 14 à 17 que des moyens élastiques de centrage radial 20 peuvent être intercalés radialement entre l'axe lisse 10 et le pignon de synchronisation 8, lesdits moyens 20 tendant à toujours recentrer ledit pignon 8 sur ledit axe 10 notamment après qu'un effort radial appliqué sur ledit pignon 8 ait excentré ledit pignon 8 par rapport audit axe 10.

On note que selon cette configuration particulière du rouleau synchronisé à roues libres 1 suivant l'invention, si par exemple la surface cylindrique externe roulante 3 est soumise à une forte charge radiale et si la vitesse d'avancement effective de ladite surface 3 par rapport aux pistes de roulement 4 avec lesquelles elle coopère est sensiblement différente de celle du pignon de synchronisation 8 par rapport aux dites pistes 4, les moyens élastiques de centrage radial 20 permettent une légère excentration dudit pignon 8 par rapport à l'axe lisse 10 autour duquel il peut tourner, ladite excentration permettant notamment d'éviter que la différence de vitesse qui vient d'être évoquée ne se traduise par une charge excessive des dents 11 que comporte le système d'engrenage 7.

Selon la configuration particulière du rouleau synchronisé à roues libres 1 suivant l'invention 7 qui vient d'être décrite, on voit en figure 15 que les moyens élastiques de centrage radial 20 peuvent être constitués d'au moins trois languettes élastiques de centrage radial 21 qui d'une part, émergent radialement de la surface interne d'un évidemment central 22 que comporte le pignon de synchronisation 8 et d'autre part, peuvent toucher l'axe lisse 10. On note que les languettes élastiques de centrage 21 peuvent être réalisées dans la même pièce de matière que le pignon de synchronisation 8.

A titre d'alternative montrée en figure 16, on note que les moyens élastiques de centrage radial 20 peuvent être constitués d'au moins une rondelle à languettes 23 qui présente en son centre un manchon tournant 24 qui peut tourner autour de l'axe lisse 10, et dont la face cylindrique externe est hérissée d'au moins trois languettes élastiques de centrage radial 21 qui peuvent appuyer sur la surface interne d'un évidemment central 22 que comporte le pignon de synchronisation 8.

Une autre variante montrée en figure 17 prévoit que les moyens élastiques de centrage radial 20 peuvent être constitués d'au moins trois anneaux déformables 26 qui d'une part, sont placés dans un logement d'anneau 27 aménagé sur la surface interne d'un évidemment central 22 que comporte le pignon de synchronisation 8 et d'autre part, peuvent toucher l'axe lisse 10. On note que les anneaux déformables 26 peuvent être montés plus ou moins serrés entre le logement d'anneau 27 dans lequel ils sont placés d'une part, et l'axe lisse 10 d'autre part.

La variante montrée en figure 18 prévoit quant à elle que les moyens élastiques de centrage radial 20 peuvent être constitués d'au moins une rondelle élastique à ondulations radiales 32 logée entre d'une part, la face cylindrique interne d'un évidemment central 22 que comporte le pignon de synchronisation 8 et d'autre part, l'axe lisse 10, l'évidemment central 22 pouvant présenter une forme complémentaire à celle de la rondelle élastique à ondulations radiales 32.

En figure 14, on aura remarqué que les moyens élastiques de centrage radial 20 peuvent également être constitués d'au moins un anneau compressible 28 réalisé en matériau souple, ledit anneau 28 s'intercalant radialement entre d'une part, la surface interne d'un évidemment central 22 que comporte le pignon de synchronisation 8 et d'autre part, une bague support d'anneau souple 29 qui peut tourner autour de l'axe lisse 10.

On notera que ledit matériau souple peut être un élastomère tel que du caoutchouc, du silicone, ou tout autre matériau compressible présentant l'élasticité et la résistance mécanique recherchées.

On remarquera également que ledit matériau souple peut être surmoulé directement sur le pignon de synchronisation 8 et sur la bague support d'anneau souple 29 pour ne former avec ces composants 8, 29 qu'une seule et même pièce.

La figure 19 montre cette fois que c'est le pignon de synchronisation 8 lui-même qui peut présenter des moyens élastiques de centrage radial 20 qui tendent à toujours recentrer ledit pignon 8 sur l'axe lisse 10 et qui sont constitués d'au moins une languette élastique de centrage radial 21 dont la première extrémité est solidaire d'une jante de pignon 30 que présente en sa périphérie le pignon de synchronisation 8 et dont la deuxième extrémité est solidaire d'un moyeu de pignon 31 que présente en son centre le pignon de synchronisation 8, ledit moyeu 31 s'articulant autour de l'axe lisse 10.

On note que selon cette configuration particulière du rouleau synchronisé à roues libres 1 suivant l'invention, la languette élastique de centrage radial 21 peut adopter toute géométrie, sans limitation aucune. Toutefois, la languette élastique de centrage radial 21 est de préférence de faible épaisseur et orientée tangentiellement à l'axe lisse 10 de sorte à offrir une réserve d'élasticité suffisante pour permettre à la jante de pignon 30 de s'excentrer par rapport au moyeu de pignon 31, dans les conditions recherchées.

Comme le montrent plus particulièrement les figures 1 à 4, le pignon de synchronisation 8 peut présenter des moyens élastiques de centrage radial 20 qui tendent à toujours recentrer ledit pignon 8 sur l'axe lisse 10 et qui sont constitués d'un voile de faible épaisseur 33 formant au moins un cône de voile 34, la première extrémité dudit voile 33 étant solidaire d'une jante de pignon 30 que présente en sa périphérie le pignon de synchronisation 8 tandis que la deuxième extrémité dudit voile 33 est solidaire d'un moyeu de pignon 31 que présente en son centre le pignon de synchronisation 8, ledit moyeu 31 s'articulant autour de l'axe lisse 10.

On note que selon cette configuration particulière du rouleau synchronisé à roues libres 1 suivant l'invention, le voile de faible épaisseur 33 peut se substituer à une rondelle élastique de guidage axial 19 pour plaquer d'une part et au moyen de la jante de pignon 30, une rondelle rigide de guidage axial 16 contre une face d'appui axial 17 qu'expose le corps central 2 entre l'axe lisse 10 et la surface cylindrique externe roulante 3, et d'autre part, le moyeu de pignon 31 contre les moyens d'arrêt axial de pignon 12.

On remarque aussi qu'avantageusement, le voile de faible épaisseur 33 peut être ajouré pour en réduire la rigidité.

Enfin la figure 14 illustre qu'au moins l'une des terminaisons 9 du corps central 2 peut avantageusement présenter une face d'appui axial 17 située entre l'axe lisse 10 et la surface cylindrique externe roulante 3, ladite face 17 étant creusée d'un évidement anti-effet de bord 39.

On note que l'évidement anti effet de bord 39 en question peut être par exemple de forme tronco-toroïdale, ou être circulaire selon une section en « U », en « V », ou selon une section en quelque forme que ce soit, ou être de quelque forme creuse que ce soit aménagée dans la face d'appui axial 17.

Ainsi, lorsque le rouleau synchronisé à roues libres 1 supporte une forte charge, l'évidement anti effet de bord 39 limite la contrainte appliquée au matériau constitutif du corps central 2 au niveau des bords axiaux de la surface cylindrique externe roulante 3, ladite contrainte étant connue de l'homme de l'art sous l'appellation de « effet de bord ».

Dans l'objectif de limiter ladite contrainte, l'évidement anti effet de bord 39 prévu à titre de variante du rouleau synchronisé à roues libres 1 suivant l'invention se substitue avantageusement à un bombé aménagé sur la surface cylindrique externe roulante 3 ou sur les pistes de roulement 4 avec lesquelles elle coopère.

Par rapport audit bombé, l'évidement anti effet de bord 39 présente l'avantage de produire une répartition plus homogène de la pression de contact sur toute la longueur de la surface cylindrique externe roulante 3.

L'absence de bombé permet en outre de simplifier la fabrication du rouleau synchronisé à roues libres 1 suivant l'invention, la surface cylindrique externe roulante 3 restant alors parfaitement cylindrique et non en forme de tonneau.

### FONCTIONNEMENT DE L'INVENTION :

Le fonctionnement du rouleau synchronisé à roues libres 1 selon l'invention se comprend aisément à la vue des figures 1 à 19.

Pour détailler ledit fonctionnement, nous retiendrons ici l'exemple de réalisation du rouleau synchronisé à roues libres 1 selon l'invention tel qu'illustré en figures 1 à 4, ledit rouleau 1 étant identique en figures 5 à 12, bien que moins visible. En outre, nous supposerons que ledit rouleau synchronisé 1 fait partie d'un palier à rouleaux synchronisés 35 tel que celui illustré en figures 5 et 6.

On peut remarquer que ledit palier 35 est similaire à ceux trouvés dans le brevet relatif à un moteur-pompe hydraulique à cylindrée fixe ou variable et publié sous le N° FR 3 001 774, ledit brevet appartenant au demandeur.

Comme le montrent les figures 2 à 4, le rouleau synchronisé à roues libres 1 comprend un corps central 2 qui expose une surface cylindrique externe roulante 3, laquelle est enserrée entre deux pistes de roulement 4 comme le montrent la figure 5 et les figures 7 à 11, sur lesquelles ladite surface 3 roule simultanément lorsque lesdites pistes 4 se déplacent l'une par rapport à l'autre.

Chaque dite piste 4 est solidairement bordée de couronnes de synchronisation 6 qui forment un système d'engrenage 7 avec un pignon de synchronisation 8 que présente chaque terminaison 9 du corps central 2.

Pour une meilleure compréhension du fonctionnement du rouleau synchronisé à roues libres 1 selon l'invention, les autres rouleaux synchronisés à roues libres 1 faisant partie dudit palier 35 ne sont pas représentés en figures 7 à 10, de même que n'est représentée qu'une portion des couronnes de synchronisation 6 constitutives dudit palier 35, ladite portion étant suffisante pour illustrer ledit fonctionnement.

On constate sur les figures 1 à 4 que les moyens d'arrêt axial de pignon 12 sont constitués d'un anneau élastique d'arrêt axial 14 logé dans une gorge d'anneau élastique 15 qui est aménagée sur l'axe lisse 10 autour duquel le pignon de synchronisation 8 peut tourner librement, tandis qu'une rondelle d'arrêt axial 25 est intercalée axialement entre ledit anneau 14 et ledit pignon 8.

On voit également sur les figures 1 à 4 prises ici à titre d'exemple de réalisation du rouleau synchronisé à roues libres 1 selon l'invention que les moyens de guidage axial de rouleau 13 sont constitués d'une rondelle rigide de guidage axial 16 qui est axialement intercalée entre le pignon de synchronisation 8 et la face d'appui axial 17 qu'expose le corps central 2 entre son axe lisse 10 et sa surface cylindrique externe roulante 3.

Toujours selon cet exemple de réalisation, on remarque en figures 2 et 4 qu'une rondelle élastique de guidage axial 19 est prévue, qui est intercalée entre la rondelle rigide de guidage axial 16 et le pignon de synchronisation 8. Ladite rondelle élastique 19 tend à plaquer d'une part, la rondelle rigide de guidage axial 16 contre la face d'appui axial 17 et d'autre part, le pignon de synchronisation 8 contre les moyens d'arrêt axial de pignon 12.

On voit particulièrement bien en figures 11 et 12 que la rondelle rigide de guidage axial 16 est prévue pour prendre appui si nécessaire sur la piste axiale de guidage 18 qu'exposent axialement chacune des pistes de roulement 4. On note que la rondelle rigide de guidage axial 16 expose - au niveau de la zone de contact entre ladite rondelle 16 et ladite piste 18 - un bord en dépouille qui évite que la matière constitutive de ladite rondelle 16 n'entaille la matière constitutive de ladite piste 18.

Pour illustrer le fonctionnement du rouleau synchronisé à roues libres 1 selon l'invention, nous en prendrons donc la variante exposée en figures 1 à 4 selon laquelle des moyens élastiques de centrage radial 20 sont intercalés radialement entre l'axe lisse 10 et le pignon de synchronisation 8. Lesdits moyens 20 tendent à toujours recentrer ledit pignon 8 sur ledit axe 10, et prennent ici la forme d'un voile de faible épaisseur 33 formant deux cônes de voile 34.

Comme on le voit clairement en figures 2, la première extrémité dudit voile 33 est solidaire d'une jante de pignon 30 que présente en sa périphérie le pignon de synchronisation 8 tandis que la deuxième extrémité dudit voile 33 est solidaire d'un moyeu de pignon 31 que présente en son centre le pignon de synchronisation 8, ledit moyeu 31 s'articulant autour de l'axe lisse 10.

Nous détaillerons ici ce qui survient lorsque le rouleau synchronisé à roues libres 1 selon l'invention est chargé ce qui - dans un palier à rouleaux synchronisés 35 similaire à ceux trouvés dans le brevet N° FR 3 001 774 - n'intervient que sur approximativement un demi-tour.

A titre de précaution, on aura prévu un jeu suffisant entre les dents 11 du pignon de synchronisation 8 et celles des couronnes de synchronisation 6. Le sens de rotation du palier à rouleaux synchronisés 35 n'étant pas alternatif mais continu, ledit jeu ne peut se traduire par quelque émission acoustique que ce soit.

Lorsque sur approximativement un tour du palier à rouleaux synchronisés 35 le rouleau synchronisé à roues libres 1 est chargé, ce dernier est soumis à une forte compression radiale. Il en résulte que ledit rouleau 1 s'écrase sensiblement au point que sa surface cylindrique externe roulante 3 se déforme, n'est plus exactement circulaire, et présente deux méplats.

Ladite compression radiale induit dans une certaine mesure une compression tangentielle de la matière constitutive de la surface cylindrique externe roulante 3, ce qui conduit à une modification sensible de la circonférence de ladite surface 3.

A ceci s'ajoute une inévitable différence entre le diamètre initial de la surface cylindrique externe roulante 3 et celui du cercle primitif du pignon de synchronisation 8 que présente chaque terminaison 9 du corps central 2 du rouleau synchronisé à roues libres 1. Ceci provient de ce que la précision de réalisation de ladite surface 3 et dudit pignon 8 n'est pas infinie.

Qu'il s'agisse de la compression radiale à laquelle est soumise la surface cylindrique externe roulante 3, ou de la différence entre le diamètre initial de ladite surface 3 et celui du cercle primitif des pignons de synchronisation 8, ces deux facteurs conduisent - particulièrement lorsque le rouleau synchronisé à roues libres 1 se déplace sous charge par rapport aux pistes de roulement 4 avec lesquelles il coopère - à une différence de vitesse angulaire entre celle de la surface cylindrique externe roulante 3 et celle des pignons de synchronisation 8.

Précisons que ladite vitesse angulaire s'applique ici à la rotation de ladite surface 3 et des dits pignons 8 autour de l'axe du rouleau synchronisé à roues libres 1 auquel ils appartiennent.

Si les pignons de synchronisation 8 étaient rigidement solidaires du corps central 2, ladite différence de vitesse angulaire conduirait inévitablement à une surcharge des dents 11 du pignon de synchronisation 8 et de celles des couronnes de synchronisation 6.

Comme le rouleau synchronisé à roues libres 1 suivant l'invention prévoit que les pignons de synchronisation 8 peuvent librement tourner autour de l'axe lisse 10 avec lequel ils coopèrent, ladite différence de vitesse angulaire n'a pas pour conséquence de surcharger les dents 11, et la surface cylindrique externe roulante 3 peut librement se décaler angulairement par rapport aux pignons de synchronisation 8.

Ce décalage est illustré en figures 7 et 8. La figure 7 montre un décalage angulaire initial **DAI** nul qui se transforme après une certaine distance parcourue par le rouleau synchronisé à roues libres 1 en un décalage angulaire de roulement **DAR** non nul tel que montré en figure 8. Pour une meilleure compréhension, ledit décalage **DAR** est visuellement volontairement exagéré.

On notera que le décalage angulaire **DAR** s'opère sans nuire au bon maintien de l'alignement et de l'orientation du rouleau synchronisé à roues libres 1 par rapport aux pistes de roulement 4 avec lesquelles il coopère.

En effet, les positions angulaires relatives au palier à rouleaux synchronisés 35 des pignons de synchronisation 8 d'un même rouleau synchronisé à roues libres 1 sont invariablement identiques dans la mesure où les deux couronnes de synchronisation 6 d'une même piste de roulement 4 sont indexées en rotation de manière identique. Lesdites positions angulaires sont donc imposées par le système d'engrenage 7.

Par ailleurs, on note que si la surface cylindrique externe roulante 3 roulait sans glissement sur les pistes de roulement 4 avec lesquelles elle coopère, sa position angulaire par rapport au palier à rouleaux synchronisés 35 resterait invariablement identique à celle des deux pignons de synchronisation 8 reliés au même corps central 2 qu'elle, quel que soit le diamètre de ladite surface 3.

A ce stade de l'explication du fonctionnement du rouleau synchronisé à roues libres 1 suivant l'invention, on comprend donc que la seule perturbation qui pourrait désormais surcharger les dents 11 constitutives du système d'engrenage 7 proviendrait non plus d'une différence entre la vitesse angulaire de la surface cylindrique externe roulante 3 et celle des pignons de synchronisation 8 suivant leur axe propre conduisant à un décalage angulaire **DAR** tel que montré en figure 8, mais d'une différence entre d'une part, la vitesse angulaire de ladite surface 3 par rapport au palier à rouleaux synchronisés 35 et d'autre part, la vitesse angulaire des pignons de synchronisation 8 par rapport audit palier 35.

Cette deuxième différence ne peut provenir que de défauts de réalisation des dents 11 constitutives du système d'engrenage 7. Ces défauts existent nécessairement car la précision de ladite réalisation n'est pas infinie.

On notera que lesdits défauts perturbent la rotation des pignons de synchronisation 8 par rapport au palier à rouleaux synchronisés 35. Par conséquent, ladite rotation peut passer alternativement de légèrement en avance à légèrement en retard par rapport à la rotation idéale de pignons de synchronisation 8 idéaux présentant un profil en développante de cercle parfait.

En pratique, ladite légère avance ou ledit léger retard peuvent ne valoir que quelques microns. Toutefois, sur des dents 11 de petite dimension, lesdits microns peuvent représenter des niveaux de charge élevés voire excessifs, qui peuvent conduire à l'usure prématurée voire à la rupture desdites dents 11.

En outre, toute surcharge anormale des dents 11 produit du frottement, ce qui est dommageable au bilan énergétique global du mécanisme ou de l'appareil dans lequel est mis en oeuvre le palier à rouleaux synchronisés 35.

C'est pour prévenir et pour résoudre ce problème que selon la variante de réalisation du rouleau synchronisé à roues libres 1 suivant l'invention prise ici pour en illustrer le fonctionnement, le pignon de synchronisation 8 que présente chaque terminaison 9 du corps central 2 dudit rouleau 1 comporte des moyens élastiques de centrage radial 20 qui tendent à toujours recentrer ledit pignon 8 sur l'axe lisse 10 avec lequel il coopère. Lesdits moyens 20 sont en l'occurrence constitués d'un voile de faible épaisseur 33 formant deux cônes de voile 34.

La rigidité des deux cônes de voile 34 a été prévue significativement plus faible que celle des dents 11, mais suffisamment grande pour assurer un maintien ferme de l'alignement du corps central 2 par rapport aux pistes de roulement 4.

Le séquencement du fonctionnement des moyens élastiques de centrage radial 20 est particulièrement illustré par les figures 9 et 10. La figure 9 montre une excentration initiale **ExI** nulle qui se transforme après une certaine distance parcourue par le rouleau synchronisé à roues libres 1 en une excentration de roulement **ExR** non-nulle tel que montré en figure 10. Pour une meilleure compréhension, ladite excentration **ExR** est visuellement volontairement exagéré.

On comprend donc que, lorsque fugacement survient une différence entre la vitesse angulaire de la surface cylindrique externe roulante 3 par rapport à l'axe du palier à rouleaux synchronisés 35 et la vitesse angulaire des pignons de synchronisation 8 par rapport à l'axe dudit palier 35, la jante de pignon 30 que présente en sa périphérie le pignon de synchronisation 8 s'excentre sensiblement par rapport au moyeu de pignon 31 que présente en son centre ledit pignon 8, ce qui produit l'excentration de roulement **ExR.** Cette excentration **ExR** protège les dents 11 de toute surcharge excessive, lesdites dents 11 ne subissant - consécutivement à ladite excentration - qu'une légère variation de charge.

On notera qu'une fois que la surface cylindrique externe roulante 3 est déchargée de toute compression radiale ce qui survient lorsque le rouleau synchronisé à roues libres 1 se retrouve dans le secteur angulaire non-chargé du palier à rouleaux synchronisés 35, les moyens élastiques de centrage radial 20 peuvent recentrer la jante de pignon 30 sur le moyeu de pignon 31 de sorte à retrouver une excentration initiale **ExI** nulle telle que montrée en figure 9, avant que ladite surface 3 ne soit soumise à un nouveau cycle de charge.

On a remarqué - particulièrement en figures 1 à 4 - les moyens de guidage axial de rouleau 13 qui sont constitués d'une rondelle rigide de guidage axial 16 axialement intercalée entre le pignon de synchronisation 8 et la face d'appui axial 17 qu'expose le corps central 2 entre son axe lisse 10 et sa surface cylindrique externe roulante 3.

On a aussi remarqué en figures 2 et 4 la rondelle élastique de guidage axial 19 qui est intercalée entre la rondelle rigide de guidage axial 16 et le pignon de synchronisation 8.

Si, lorsqu'elle est sous charge, la surface cylindrique externe roulante 3 tend à se désaligner de l'une quelconque des pistes de roulement 4 avec lesquelles elle coopère, la rondelle rigide de guidage axial 16 et la rondelle élastique de guidage axial 19 sont prévues pour coopérer à conserver ladite surface 3 alignée avec lesdites pistes 4 ou du moins, à réaligner ladite surface 3 avec lesdites pistes 4 entre deux cycles de charge de ladite surface 3.

Le fonctionnement coopératif de ladite rondelle rigide 16 et ladite rondelle élastique 19 est particulièrement illustré en figures 11 et 12.

La figure 11 montre la position axiale centrée sur les pistes de roulement 4 qui est recherchée pour la surface cylindrique externe roulante 3. Le désalignement initial **DI** de ladite surface 3 par rapport aux dites pistes 4 y est donc nul.

Lorsque la surface cylindrique externe roulante 3 est sous charge et si elle tend à se désaligner avec les pistes de roulement 4, dans un premier temps, la rondelle rigide de guidage axial 16 correspondante laisse ladite surface 3 se désaligner en se décollant de la face d'appui axial 17 sur laquelle elle est plaquée, et en comprimant la rondelle élastique de guidage axial 19.

Il en résulte un désalignement de roulement **DR** de la surface cylindrique externe roulante 3 par rapport aux pistes de roulement 4 avec lesquelles elle coopère non-nul, tel que montré en figure 12. Pour une meilleure compréhension, ledit désalignement **DR** est visuellement volontairement exagéré.

Dans un deuxième temps et dès que la charge radiale qui s'exerce sur la surface cylindrique externe roulante 3 diminue voire disparaît, la rondelle élastique de guidage axial 19 peut ramener à moindre effort ladite surface 3 en position centrée par rapport aux pistes de roulement 4 et ceci, par l'intermédiaire de la rondelle rigide de guidage axial 16.

Il en résulte un retour au désalignement initial **DI** nul de la surface cylindrique externe roulante 3 par rapport aux pistes de roulement 4 avec lesquelles elle coopère, tel que montré en figure 11.

On comprend aisément que la coopération entre la rondelle rigide de guidage axial 16 et la rondelle élastique de guidage axial 19 limite la pression exercée par la rondelle rigide de guidage axial 16 sur la piste axiale de guidage 18 qu'expose axialement la piste de roulement 4 avec laquelle coopère ladite rondelle 16.

En effet, en l'absence de rondelle élastique de guidage axial 19, la rondelle rigide de guidage axial 16 devrait recentrer en permanence la surface cylindrique externe roulante 3, y-compris lorsque cette dernière est soumis à forte charge.

D'ailleurs, la rondelle rigide de guidage axial 16 ne peut guère reprendre des efforts axiaux élevés car elle coopère avec les pistes axiales de guidage 18 par l'intermédiaire d'une petite surface de contact, ledit contact étant nécessairement en grande partie glissant.

En conséquence de ce qui vient d'être dit, le palier à rouleaux synchronisés 35 dont fait partie le rouleau synchronisé à roues libres 1 suivant cet exemple n'est pas non plus conçu pour reprendre d'effort axial significativement élevé, lequel doit être plutôt repris au moyen par exemple d'une butée axiale à bille ou à rouleaux connue en soi qui coopère avec le palier à rouleaux synchronisés 35.

On notera qu'outre le fonctionnement particulier qui vient d'être décrit et qui lui confère une grande pérennité et un rendement énergétique élevé, le rouleau synchronisé à roues libres 1 suivant l'invention permet notamment de produire divers appareils parmi lesquels des paliers à rouleaux synchronisés 35 à très haute efficacité énergétique, fortement chargés, et pouvant tourner à haute vitesse malgré leur grand diamètre.

On remarquera que le rouleau synchronisé à roues libres 1 suivant l'invention est également prévu pour présenter le prix de revient en fabrication le plus bas possible.

En effet, les pignons de synchronisation 8 dudit rouleau 1 peuvent être produits séparément et à moindre coût par frittage ou frappe à froid, sans nécessiter une grande précision géométrique ou des corrections de profil chères vu que la charge appliquée aux dents 11 constitutives desdits pignons 8 est faible.

La faible charge appliquée aux pignons de synchronisation 8 permet également d'éviter de recourir pour leur fabrication à tout traitement de surface ou traitement thermique onéreux.

La fabrication des pièces plus simples comme la rondelle rigide de guidage axial 16 ou la rondelle élastique de guidage axial 19 ne présente en soi aucune difficulté et est notoirement bon marché.

La fabrication du corps central 2 du rouleau synchronisé à roues libres 1 suivant l'invention reste également simple notamment en ce que la réalisation de l'axe lisse 10 n'en appelle pas à une grande précision.

Par ailleurs, la finition de la surface cylindrique externe roulante 3 peut être réalisée par rectification connue sous l'appellation anglo-saxonne « centerless », laquelle est notoirement précise, bon marché, et garante d'une excellente répétabilité.

On notera également que pour réduire l'effet de bord, un bombé transversal peut avantageusement être réalisé sur les pistes de roulement 4 plutôt que sur la surface cylindrique externe roulante 3.

Les couronnes de synchronisation 6 peuvent être prévues rapportées par vissage sur les pièces mécaniques qui reçoivent le palier à rouleaux synchronisés 35 cependant que les pistes de roulement 4 avec lesquelles elles coopèrent sont soit directement réalisées dans lesdites pièces mécaniques, soit rapportées dans ces dernières.

Les possibilités du rouleau synchronisé à roues libres 1 suivant l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention dont on ne sortirait pas en remplaçant les détails d'exécution décrits par tout autre équivalent.

## Revendications

1. Rouleau synchronisé à roues libres (1) destiné à être monté dans un dispositif et comprenant un corps central (2) qui expose une surface cylindrique externe roulante (3) prévue enserrée entre deux pistes de roulement (4) du dispositif sur lesquelles elle est prévue de rouler simultanément lorsque lesdites pistes (4) se déplacent l'une par rapport à l'autre, chaque dite piste (4) étant solidairement bordée de moyens de synchronisation (6) du dispositif qui forment un système d'engrenage (7) avec un pignon de synchronisation (8) que présente chaque terminaison (9) du corps central lorsque le rouleau synchronisé est-monté dans le dispositif, le rouleau étant **caractérisé en ce qu'il comprend** :
• Un axe lisse (10) de diamètre inférieur à celui de la surface cylindrique roulante (3), aménagé à chaque terminaison (9) du corps central (2), et autour duquel le pignon de synchronisation (8) peut tourner librement ;
• Des moyens d'arrêt axial de pignon (12) solidaires de l'axe lisse (10) qui prennent appui d'une part, directement ou indirectement sur ledit axe (10) et d'autre part, directement ou indirectement sur le pignon de synchronisation (8), pour empêcher ledit pignon (8) de sortir dudit axe (10) ;
• Des moyens de guidage axial de rouleau (13) qui prennent appui d'une part, directement ou indirectement sur le corps central (2) et d'autre part, sont aptes à prendre appui directement ou indirectement sur l'une au moins des pistes de roulement (4) du dispositif avec lesquelles coopère la surface cylindrique roulante (3), pour garder cette dernière approximativement centrée sur lesdites pistes (4).

2. Rouleau synchronisé à roues libres suivant la revendication 1, **caractérisé en ce que** les moyens d'arrêt axial de pignon (12) sont constitués d'un anneau élastique d'arrêt axial (14) logé dans une gorge d'anneau élastique (15) aménagée sur l'axe lisse (10).

3. Rouleau synchronisé à roues libres suivant la revendication 1, **caractérisé en ce que** les moyens de guidage axial de rouleau (13) sont constitués d'une rondelle rigide de guidage axial (16) qui est axialement et directement ou indirectement intercalée entre le pignon de synchronisation (8) et une face d'appui axial (17) qu'expose le corps central (2) entre l'axe lisse (10) et la surface cylindrique externe roulante (3), ladite rondelle rigide (16) pouvant prendre appui sur une piste axiale de guidage (18) qu'expose axialement au moins l'une des pistes de roulement (4).

4. Rouleau synchronisé à roues libres suivant la revendication 3, **caractérisé en ce qu'**une rondelle élastique de guidage axial (19) est intercalée entre la rondelle rigide de guidage axial (16) et le pignon de synchronisation (8), ladite rondelle élastique (19) tendant à plaquer d'une part, la rondelle rigide de guidage axial (16) contre la face d'appui axial (17) avec laquelle elle coopère et d'autre part, le pignon de synchronisation (8) contre les moyens d'arrêt axial de pignon (12) avec lesquels il coopère.

5. Rouleau synchronisé à roues libres suivant la revendication 3, **caractérisé en ce qu'**une rondelle élastique de guidage axial (19) est intercalée entre le pignon de synchronisation (8) et les moyens d'arrêt axial de pignon (12), ladite rondelle élastique (19) tendant à plaquer le pignon de synchronisation (8) contre la rondelle rigide de guidage axial (16) de sorte que cette dernière se trouve à son tour plaquée contre la face d'appui axial (17) avec laquelle elle coopère.

6. Rouleau synchronisé à roues libres suivant la revendication 5, **caractérisé en ce que** la rondelle élastique de guidage axial (19) comporte en son centre des griffes de centrage (37) encliquetées dans une gorge à griffes (38) aménagée sur l'axe lisse (10), ladite gorge (38) constituant les moyens d'arrêt axial de pignon (12).

7. Rouleau synchronisé à roues libres suivant la revendication 1, **caractérisé en ce que** des moyens élastiques de centrage radial (20) sont intercalés radialement entre l'axe lisse (10) et le pignon de synchronisation (8), lesdits moyens (20) tendant à toujours recentrer ledit pignon (8) sur ledit axe (10).

8. Rouleau synchronisé à roues libres suivant la revendication 7, **caractérisé en ce que** les moyens élastiques de centrage radial (20) sont constitués d'au moins trois languettes élastiques de centrage radial (21) qui d'une part, émergent radialement de la surface interne d'un évidemment central (22) que comporte le pignon de synchronisation (8) et d'autre part, peuvent toucher l'axe lisse (10).

9. Rouleau synchronisé à roues libres suivant la revendication 7, **caractérisé en ce que** les moyens élastiques de centrage radial (20) sont constitués d'au moins une rondelle à languettes (23) qui présente en son centre un manchon tournant (24) qui peut tourner autour de l'axe lisse (10), et dont la face cylindrique externe est hérissée d'au moins trois languettes élastiques de centrage radial (21) qui peuvent appuyer sur la surface interne d'un évidemment central (22) que comporte le pignon de synchronisation (8).

10. Rouleau synchronisé à roues libres suivant la revendication 7, **caractérisé en ce que** les moyens élastiques de centrage radial (20) sont constitués d'au moins trois anneaux déformables (26) qui d'une part, sont placés dans un logement d'anneau (27) aménagé sur la surface interne d'un évidemment central (22) que comporte le pignon de synchronisation (8) et d'autre part, peuvent toucher l'axe lisse (10).

11. Rouleau synchronisé à roues libres suivant la revendication 7, **caractérisé en ce que** les moyens élastiques de centrage radial (20) sont constitués d'au moins une rondelle élastique à ondulations radiales (32) logée entre d'une part, la face cylindrique interne d'un évidemment central (22) que comporte le pignon de synchronisation (8) et d'autre part, l'axe lisse (10).

12. Rouleau synchronisé à roues libres suivant la revendication 7, **caractérisé en ce que** les moyens élastiques de centrage radial (20) sont constitués d'au moins un anneau compressible (28) réalisé en matériau souple, ledit anneau (28) s'intercalant radialement entre d'une part, la surface interne d'un évidemment central (22) que comporte le pignon de synchronisation (8) et d'autre part, une bague support d'anneau souple (29) qui peut tourner autour de l'axe lisse (10).

13. Rouleau synchronisé à roues libres suivant la revendication 1, **caractérisé en ce que** le pignon de synchronisation (8) présente des moyens élastiques de centrage radial (20) qui tendent à toujours recentrer ledit pignon (8) sur l'axe lisse (10) et qui sont constitués d'au moins une languette élastique de centrage radial (21) dont la première extrémité est solidaire d'une jante de pignon (30) que présente en sa périphérie le pignon de synchronisation (8) et dont la deuxième extrémité est solidaire d'un moyeu de pignon (31) que présente en son centre le pignon de synchronisation (8), ledit moyeu (31) s'articulant autour de l'axe lisse (10).

14. Rouleau synchronisé à roues libres suivant la revendication 1, **caractérisé en ce que** le pignon de synchronisation (8) présente des moyens élastiques de centrage radial (20) qui tendent à toujours recentrer ledit pignon (8) sur l'axe lisse (10) et qui sont constitués d'un voile de faible épaisseur (33) formant au moins un cône de voile (34), la première extrémité dudit voile (33) étant solidaire d'une jante de pignon (30) que présente en sa périphérie le pignon de synchronisation (8) tandis que la deuxième extrémité dudit voile (33) est solidaire d'un moyeu de pignon (31) que présente en son centre le pignon de synchronisation (8), ledit moyeu (31) s'articulant autour de l'axe lisse (10).

15. Rouleau synchronisé à roues libres suivant la revendication 1, **caractérisé en ce que** au moins l'une des terminaisons (9) du corps central (2) présente un évidement anti-effet de bord (39) situé entre l'axe lisse (10) et la surface cylindrique externe roulante (3).

## Patentansprüche

1. Synchronisierte Rolle mit Freilaufrädern (1), die dazu bestimmt ist, in einer Vorrichtung befestigt zu werden und die einen zentralen Körper (2) aufweist, der eine äußere zylindrische Rolloberfläche (3) freilegt, die zwischen zwei Rollbahnen (4) der Vorrichtung eingespannt vorgesehen ist, auf denen sie vorgesehen ist, gleichzeitig zu rollen, wenn sich die Bahnen (4) relativ zueinander bewegen, wobei jede Bahn (4) einstückig von Synchronisationsmitteln (6) der Vorrichtung gesäumt ist, die ein Getriebesystem (7) mit einem Synchronritzel (8) bilden, das jedes Ende (9) des zentralen Körpers aufweist, an dem die synchronisierte Rolle in der Vorrichtung montiert ist, wobei die Rolle
**dadurch gekennzeichnet, dass** sie aufweist:
• eine glatte Achse (10) mit kleinerem Durchmesser als jenem der zylindrischen Rolloberfläche (3), die an jedem Ende (9) des zentralen Körpers (2) ausgebildet ist, und um die sich das Synchronritzel (8) frei drehen kann,
• Mittel für den axialen Anschlag des Ritzels (12), die mit der glatten Achse (10) fest verbunden sind und die einerseits direkt oder indirekt an der Achse (10) und andererseits direkt oder indirekt an dem Synchronritzel (8) anliegen, um zu verhindern, dass das Ritzel (8) aus der Achse (10) heraustritt,
• Mittel für die axiale Führung der Rolle (13), die einerseits direkt oder indirekt am zentralen Körper (2) anliegen und andererseits geeignet sind, direkt oder indirekt an mindestens einer der Rollbahnen (4) der Vorrichtung anzuliegen, mit denen die zylindrische Rolloberfläche (3) zusammenwirkt, um diese Letztere ungefähr mittig auf den Bahnen (4) zentriert zu halten.

2. Synchronisierte Rolle mit Freilaufrädern nach Anspruch 1, **dadurch gekennzeichnet, dass** die Mittel für den axialen Anschlag des Ritzels (12) aus einem Sprengring für den axialen Anschlag (14) gebildet sind, der in einer Sprengringnut (15) untergebracht ist, die auf der glatten Achse (10) ausgebildet ist.

3. Synchronisierte Rolle mit Freilaufrädern nach Anspruch 1, **dadurch gekennzeichnet, dass** die Mittel für die axiale Führung der Rolle (13) aus einer starren Unterlegscheibe für die axiale Führung (16) gebildet sind, die axial und direkt oder indirekt zwischen dem Synchronritzel (8) und einer Fläche für die axiale Anlage (17) angeordnet ist, die der zentrale Körper (2) zwischen der glatten Achse (10) und der externen zylindrischen Rolloberfläche (3) freilegt, wobei die starre Unterlegscheibe (16) an einer axialen Führungsbahn (18) anliegen kann, die mindestens eine der Rollbahnen (4) axial freilegt.

4. Synchronisierte Rolle mit Freilaufrädern nach Anspruch 3, **dadurch gekennzeichnet, dass** eine elastische Unterlegscheibe für die axiale Führung (19) zwischen der starren Unterlegscheibe für die axiale Führung (16) und dem Synchronritzel (8) angeordnet ist, wobei die elastische Unterlegscheibe (19) dazu neigt, die starre Unterlegscheibe für die axiale Führung (16) einerseits gegen die Fläche für die axiale Anlage (17), mit der sie zusammenwirkt, und andererseits das Synchronritzel (8) gegen die Mittel für den axialen Anschlag des Ritzels (12) zu drücken, mit denen es zusammenwirkt.

5. Synchronisierte Rolle mit Freilaufrädern nach Anspruch 3, **dadurch gekennzeichnet, dass** eine elastische Unterlegscheibe für die axiale Führung (19) zwischen dem Synchronritzel (8) und den Mitteln für den axialen Anschlag des Ritzels (12) angeordnet ist, wobei die elastische Unterlegscheibe (19) dazu neigt, das Synchronritzel (8) gegen die starre Unterlegscheibe für die axiale Führung (16) derart zu drücken, dass diese Letztere ihrerseits gegen die Fläche für die axiale Anlage (17) gedrückt wird, mit der sie zusammenwirkt.

6. Synchronisierte Rolle mit Freilaufrädern nach Anspruch 5, **dadurch gekennzeichnet, dass** die elastische Unterlegscheibe für die axiale Führung (19) in ihrer Mitte Zentrierkrallen (37) aufweist, die in einer Krallennut (38) eingerastet sind, die auf der glatten Achse (10) ausgebildet ist, wobei die Nut (38) die Mittel für den axialen Anschlag des Ritzels (12) bildet.

7. Synchronisierte Rolle mit Freilaufrädern nach Anspruch 1, **dadurch gekennzeichnet, dass** elastische Mittel zum radialen Zentrieren (20) radial zwischen der glatten Achse (10) und dem Synchronritzel (8) angeordnet sind, wobei die Mittel (20) dazu neigen, das Ritzel (8) auf der Achse (10) stets neu zu zentrieren.

8. Synchronisierte Rolle mit Freilaufrädern nach Anspruch 7, **dadurch gekennzeichnet, dass** die elastischen Mittel zum radialen Zentrieren (20) aus mindestens drei elastischen Zungen zum radialen Zentrieren (21) gebildet sind, die einerseits radial aus der Innenfläche einer zentralen Ausnehmung (22) hervortreten, die das Synchronritzel (8) aufweist, und andererseits die glatte Achse (10) berühren können.

9. Synchronisierte Rolle mit Freilaufrädern nach Anspruch 7, **dadurch gekennzeichnet, dass** die elastischen Mittel zum radialen Zentrieren (20) aus mindestens einer Unterlegscheibe mit Zungen (23) gebildet sind, die in ihrer Mitte eine drehbare Hülse (24) aufweist, die sich um die glatte Achse (10) drehen kann, und deren zylindrische Außenfläche mit mindestens drei elastischen Zungen zum radialen Zentrieren (21) versehen ist, die an der Innenfläche einer zentralen Ausnehmung (22) anliegen können, die das Synchronritzel (8) aufweist.

10. Synchronisierte Rolle mit Freilaufrädern nach Anspruch 7, **dadurch gekennzeichnet, dass** die elastischen Mittel zum radialen Zentrieren (20) aus mindestens drei verformbaren Ringen (26) gebildet sind, die einerseits in einer Ringausnehmung (27) angeordnet sind, die auf der Innenfläche einer zentralen Ausnehmung (22) ausgebildet ist, die das Synchronritzel (8) aufweist, und andererseits die glatte Achse (10) berühren können.

11. Synchronisierte Rolle mit Freilaufrädern nach Anspruch 7, **dadurch gekennzeichnet, dass** die elastischen Mittel zum radialen Zentrieren (20) aus mindestens einer elastischen Unterlegscheibe mit radialen Wellungen (32) gebildet sind, die einerseits zwischen der zylindrischen Innenfläche einer zentralen Ausnehmung (22), die das Synchronritzel (8) aufweist, und andererseits der glatten Achse (10) untergebracht ist.

12. Synchronisierte Rolle mit Freilaufrädern nach Anspruch 7, **dadurch gekennzeichnet, dass** die elastischen Mittel zum radialen Zentrieren (20) aus mindestens einem komprimierbaren Ring (28) gebildet sind, der aus flexiblem Material erstellt ist, wobei der Ring (28) zwischen einerseits der Innenfläche einer zentralen Ausnehmung (22), die das Synchronritzel (8) aufweist, und andererseits einem Stützring des flexiblen Rings (29) angeordnet ist, der sich um die glatte Achse (10) drehen kann.

13. Synchronisierte Rolle mit Freilaufrädern nach Anspruch 1, **dadurch gekennzeichnet, dass** das Synchronritzel (8) elastische Mittel zum radialen Zentrieren (20) aufweist, die dazu neigen, das Ritzel (8) auf der Achse (10) stets neu zu zentrieren und die aus mindestens einer elastischen Zunge zum radialen Zentrieren (21) gebildet sind, deren erstes Ende mit einer Ritzelfelge (30) fest verbunden ist, die das Synchronritzel (8) an seinem Umfang aufweist, und deren zweites Ende mit einer Ritzelnabe (31) fest verbunden ist, die das Synchronritzel (8) in seiner Mitte aufweist, wobei die Nabe (31) um die glatte Achse (10) herum artikuliert ist.

14. Synchronisierte Rolle mit Freilaufrädern nach Anspruch 1, **dadurch gekennzeichnet, dass** das Synchronritzel (8) elastische Mittel zum radialen Zentrieren (20) aufweist, die dazu neigen, das Ritzel (8) auf der glatten Achse (10) stets neu zu zentrieren und die aus einem Mantel von geringer Dicke (33) gebildet sind, der mindestens einen Mantelkonsus (34) bildet, wobei das erste Ende des Mantels (33) mit einer Ritzelfelge (30) fest verbunden ist, die das Synchronritzel (8) an seinem Umfang aufweist, während das zweite Ende des Mantels (33) mit einer Ritzelnabe (31) fest verbunden ist, die das Synchronritzel (8) in seiner Mitte aufweist, wobei die Nabe (31) um die glatte Achse (10) herum artikuliert ist.

15. Synchronisierte Rolle mit Freilaufrädern nach Anspruch 1, **dadurch gekennzeichnet, dass** mindestens eines der Enden (9) des zentralen Körpers (2) eine Anti-Randeffekt-Ausnehmung (39) aufweist, die zwischen der glatten Achse (10) und der zylindrischen Rolloberfläche (3) angeordnet ist.

## Claims

1. A synchronized roller with freewheels (1) intended to be mounted in a device and comprising a central body (2) which exposes a rolling outer cylindrical surface (3) provided interposed between two rolling tracks (4) of the device on which it is intended to roll simultaneously when said tracks (4) move relative to each other, each said track (4) being integrally lined with synchronization means (6) of the device which form a gear system (7) with a synchronizing pinion (8) which exhibits each end (9) of the central body when the synchronized roller is mounted in the device, the roller being
**characterized in that** it comprises:
• A smooth pin (10) of smaller diameter than that of the rolling cylindrical surface (3), arranged at each end (9) of the central body (2), and around which the synchronizing pinion (8) is capable to rotate freely;
• Pinion axial stop means (12) integral with the smooth pin (10) which bear, on the one hand, directly or indirectly on said pin (10) and, on the other hand, directly or indirectly on the synchronizing pinion (8), to prevent said pinion (8) from coming out of said pin (10);
• Roller axial guide means (13) which bear, on the one hand, directly or indirectly on the central body (2) and, on the other hand, are capable to bear directly or indirectly on at least one of the rolling tracks (4) of the device with which the rolling cylindrical surface (3) cooperates, to keep the latter approximately centered on said tracks (4).

2. The synchronized roller with freewheels according to claim 1, **characterized in that** the pinion axial stop means (12) consist of a axial stop spring ring (14) housed in a spring ring groove (15) arranged on the smooth pin (10).

3. The synchronized roller with freewheels according to claim 1, **characterized in that** the roller axial guide means (13) consist of a rigid axial guide washer (16) which is axially and directly or indirectly interposed between the synchronizing pinion (8) and an axial bearing surface (17) exposed by the central body (2) between the smooth pin (10) and the rolling outer cylindrical surface (3), said rigid washer (16) being capable to bear on an axial guide track (18) axially exposed by at least one of the rolling tracks (4).

4. The synchronized roller with freewheels according to claim 3, **characterized in that** an axial guide spring washer (19) is interposed between the rigid axial guide washer (16) and the synchronizing pinion (8), said spring washer (19) tending to press, on the one hand, the rigid axial guide washer (16) against the axial bearing surface (17) with which it cooperates and, on the other hand, the synchronizing pinion (8) against the pinion axial stop means (12) with which it cooperates.

5. The synchronized roller with freewheels according to claim 3, **characterized in that** an axial guide spring washer (19) is interposed between the synchronizing pinion (8) and the pinion axial stop means (12), said spring washer (19) tending to press the synchronizing pinion (8) against the rigid axial guide washer (16) so that the latter is in turn pressed against the axial bearing surface (17) with which it cooperates.

6. The synchronized roller with freewheels according to claim 5, **characterized in that** the axial guide spring washer (19) comprises at its center centering claws (37) snapped into a claw groove (38) arranged on the smooth pin (10), said groove (38) constituting the pinion axial stop means (12).

7. The synchronized roller with freewheels according to claim 1, **characterized in that** radial centering spring means (20) are interposed radially between the smooth pin (10) and the synchronizing pinion (8), said means (20) always tending to recenter said pinion (8) on said pin (10).

8. The synchronized roller with freewheels according to claim 7, **characterized in that** the radial centering spring means (20) consist of at least three radial centering spring tabs (21) which, on the one hand, emerge radially from the inner surface of a central recess (22) that comprises the synchronizing pinion (8) and, on the other hand, can touch the smooth pin (10).

9. The synchronized roller with freewheels according to claim 7, **characterized in that** the radial centering spring means (20) consist of at least one tab washer (23) which has at its center a rotating sleeve (24) which can rotate around the smooth pin (10), and whose outer cylindrical face is bristled with at least three radial centering spring tabs (21) which can press on the inner surface of a central recess (22) that comprises the synchronizing pinion (8).

10. The synchronized roller with freewheels according to claim 7, **characterized in that** the radial centering spring means (20) consist of at least three deformable rings (26) which, on the one hand, are placed in a ring housing (27) arranged on the inner surface of a central recess (22) that comprises the synchronizing pinion (8) and, on the other hand, can touch the smooth pin (10).

11. The synchronized roller with freewheels according to claim 7, **characterized in that** the radial centering spring means (20) consist of at least one spring washer with radial corrugations (32) housed between, on the one hand, the inner cylindrical surface of a central recess (22) that comprises the synchronizing pinion (8) and, on the other hand, the smooth pin (10).

12. The synchronized roller with freewheels according to claim 7, **characterized in that** the radial centering spring means (20) consist of at least one compressible ring (28) made of flexible material, said ring (28) being interposed radially between, on the one hand, the inner surface of a central recess (22) which the synchronizing pinion (8) comprises and, on the other hand, a flexible ring support bushing (29) which can rotate around the smooth pin (10).

13. The synchronized roller with freewheels according to claim 1, **characterized in that** the synchronizing pinion (8) has radial centering spring means (20) which tend to always recenter said pinion (8) on the smooth pin (10) and which consist of at least one radial centering spring tab (21), whose first end is integral with a pinion rim (30) exhibited by the synchronizing pinion (8) at its periphery and whose second end is integral with a pinion hub (31) exhibited by the synchronizing pinion (8) at its center, said hub (31) being articulated around the smooth pin (10).

14. The synchronized roller with freewheels according to claim 1, **characterized in that** the synchronizing pinion (8) has radial centering spring means (20) which tend to always recenter said pinion (8) on the smooth pin (10) and which consist of a thin web (33) forming at least one web cone (34), the first end of said web (33) being integral with a pinion rim (30) which the synchronizing pinion (8) exhibits at its periphery while the second end of said web (33) is integral with a pinion hub (31) which the synchronizing pinion (8) exhibits at its center, said hub (31) articulated around of the smooth pin (10).

15. the synchronized roller with freewheels according to claim 1, **characterized in that** at least one of the terminations (9) of the central body (2) has an anti-edge effect recess (39) located between the smooth pin (10) and the rolling outer cylindrical surface (3).
